# EUROPEAN PATENT APPLICATION

(11) **EP 1 394 698 A2**
(43) Date of publication of application: **03.03.2004**
(21) Application number: 03019384.1
(22) Date of filing: 27.08.2003
(51) Int. Cl.: G06F 17/30

(54) **Method and system for enforcing online identity consent policies**

(30) Priority: 27.08.2002 US 406274 P
(71) Applicant: MICROSOFT CORPORATION, Redmond, WA 98052 (US)
(72) Inventor: Mathew, Ashvin J., Kirkland, WA 98033 (US); Jones, Brian D., Duvall, WA 98019 (US); Vetrivel, Puhazholi, Redmond, WA 98053 (US); Mutha, Nayna, Redmond, WA 98053 (US); Radu, Costel, Redmond, WA 98053 (US)
(74) Representative: Grünecker, Kinkeldey, Stockmair & Schwanhäusser Anwaltssozietät

(57) **Abstract**

A method, system, and computer-readable medium are provided for enforcing online identities consent policies. The consent policy is enforced by creating and approving corresponding associations between an online identity manager and a managed online identity. The online identity manager has authority to consent to a task requested on behalf of the managed online identity. An application module implements a consent policy. A consent policy engine evaluates a consent policy to determine if the consent policy applies to user profile information for an online identity. An association service creates and approves an association between a manager online identity and a managed online identity based on the consent policy. The association service creates and approves an association by proposing an association, obtaining validation data for the proposed association, determining if the association validation data meets requirements of the consent policy and, if so, approving the proposed association.

## Description

### CROSS-REFERENCE TO RELATED APPLICATION

Pursuant to 35 U.S.C. § 119, this application claims the benefit of U.S. Provisional Patent Application No. 60/406,274, filed August 27, 2002, the subject matter of which is incorporated herein by reference.

### FIELD OF THE INVENTION

In general, the present application relates to computer software and, in particular, to a method and system for controlling the use of online identities in a network environment.

### BACKGROUND OF THE INVENTION

Rich interactive multimedia and vast amounts of information about virtually any topic imaginable make the Internet useful, entertaining, and popular with users. As the popularity of the Internet continues to grow, so too does the use of online identities. Online digital identities are an important part of the online experience, as these identities allow individuals to interact with other individuals and systems. Online identities can mirror real life in that an online identity may be associated with a user's online preferences, profile information, and identity information. A single user may have multiple online identities. For example, a user may have one online identity to use for performing financial tasks, a second online identity for work-related use, a third online identity for family use, and a fourth online identity for use in a sport or hobby group.

While online identities enhance the user's online experience, online identities also raise concerns. The more tasks users perform online, the more important it is for users to be able to control the use of their online identities. For example, users want to be able to control their profile information to protect their privacy and security. Users also want to be able to trust the online identities and systems with which they interact on the Internet. The increasing use of the Internet means that more and more users will likely have multiple online identities, each with corresponding control, privacy, and security concerns. In light of the above, a significant need exists for a method and system for enabling users to control the use of online identities in a network environment, such as the Internet.

### SUMMARY OF THE INVENTION

The present invention addresses the above needs by providing a method and system for enforcing online identity consent policies.

In accordance with a first aspect of the present invention, a computer system for enforcing online identity consent policies is provided. The computer system includes an application module for enforcing a consent policy. Before a managed online identity is allowed to perform a requested task covered by the consent policy, the application module determines if there is an association based on the consent policy for the managed online identity and, if so, obtains consent from an associated online identity manager. The computer system also includes a consent policy engine for evaluating a consent policy to determine if the consent policy applies to user profile information for an online identity. The computer system further includes an association module for creating and approving an association between an online identity manager and a managed online identity based on the consent policy. The association is created and approved by proposing an association between the online identity manager and the managed online identity based on the consent policy, obtaining validation data for the proposed association, determining if the association validation data meets the requirements of the consent policy and, if so, approving the proposed association.

In accordance with a second aspect of the present invention, a computer-implementable method for enforcing online identity consent policies is provided by creating and approving associations between an online identity manager and a managed online identity in accordance with the consent policy. The method includes obtaining user profile information related to a first online identity. The method also includes obtaining information related to a consent policy, including rules for imposing the consent policy onto a managed online identity. The method further includes evaluating the rules for imposing the consent policy onto a managed online identity to determine if the consent policy applies to the user profile information related to the first online identity. If the consent policy applies to the first online identity, the method creates and approves an association between the first online identity as the managed online identity and a second online identity as the online identity manager in accordance with the consent policy. The association is created and approved by proposing an association between the online identity manager and the managed online identity based on the consent policy, obtaining validation data for the proposed association, determining if the association validation data meets the requirements of the consent policy and, if so, approving the proposed association.

In accordance with a third aspect of the present invention, a computer-readable medium having computer-executable instructions for enforcing online identity consent policies is provided by creating and approving associations between an online identity manager and a managed online identity in accordance with the consent policy. When executed, the instructions cause the computer to obtain user profile information related to a first online identity, obtain information related to a consent policy, including rules for imposing the consent policy onto a managed online identity, and evaluate the rules for imposing the consent policy onto a managed online identity to determine if the consent policy applies to the user profile information related to the first online identity. If the consent policy applies to the first online identity, the executed instructions cause the computer to create and approve an association between the first online identity as the managed online identity and a second online identity as the online identity manager in accordance with the consent policy. The computer creates and approves the association by proposing an association between the online identity manager and the managed online identity based on the consent policy, obtaining validation data for the proposed association, determining if the association validation data meets requirements of the consent policy and, if so, approving the proposed association.

In accordance with a fourth aspect of the present invention, a computer-readable medium having a data structure stored thereon for creating an entry in an association database used for creating and approving associations between online identities based on a consent policy is provided. The data structure includes a data element containing association identification information, a data element containing first user identification information, said first user identification information identifying a user of a managed online identity, a data element containing second user identification information, said second user identification information identifying a user of an online identity manager, a data element containing consent policy identification information, a data element containing association validation information, a data element containing manager status information, and a data element containing managed status information.

In accordance with a fifth aspect of the present invention, a computer-readable medium having a data structure stored thereon for creating an entry in a consent policy database used for enforcing policies on online identities is provided. The data structure includes a data element containing information about restrictions and rules to be applied to online identities, and a data element containing information about instructions for validating and enforcing a consent policy.

In accordance with a sixth aspect of the present invention, a computer-readable medium having a data structure stored thereon for creating an entry in a consent policy database used for enforcing policies on online identities is provided. The data structure includes a data element containing information about intentions, said intentions being restrictions and rules a user of an online identity defines and imposes on the user's own online identity, and a data element containing information about instructions for validating and enforcing a consent policy.

### BRIEF DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is an illustration of a representative portion of an internetwork such as the Internet;
FIGURE 2 is a block diagram illustrative of a system architecture in accordance with an exemplary embodiment of the present invention;
FIGURE 3 is a block diagram illustrating an operating environment for an exemplary embodiment of the present invention;
FIGURE 4 is a diagram illustrating data structures for policy definitions utilized by an exemplary embodiment of the present invention;
FIGURE 5 is a diagram illustrating a data structure for an association database utilized by an exemplary embodiment of the present invention;
FIGURES 6 and 7 are diagrams illustrating data structures for association validation data utilized by an exemplary embodiment of the present invention;
FIGURE 8 is a flow diagram illustrating the logic utilized by an exemplary embodiment of the present invention for enforcing consent policies on a new online identity;
FIGURE 9 is a flow diagram illustrating the logic utilized by an exemplary embodiment of the present invention for enforcing consent policies on an existing online identity;
FIGURE 10 is a flow diagram illustrating the logic utilized by an exemplary embodiment of the present invention for enforcing consent policies on an online identity for which corresponding profile information has changed;
FIGURE 11 is a flow diagram illustrating the logic utilized by an exemplary embodiment of the present invention for creating a requested association between online identities based on a consent policy;
FIGURES 12 and 13 are flow diagrams illustrating the logic utilized by an exemplary embodiment of the present invention for proposing an association between online identities based on a policy;
FIGURES 14A and 14B are flow diagrams illustrating the logic utilized by an exemplary embodiment of the present invention for resolving an association between online identities based on a consent policy;
FIGURE 15 is a flow diagram illustrating the logic utilized by an exemplary embodiment of the present invention for querying association between online identities based on a consent policy;
FIGURE 16 is a flow diagram illustrating the logic utilized by an exemplary embodiment of the present invention for verifying association validation data; and
FIGURE 17 is a flow diagram illustrating the logic utilized by an exemplary embodiment of the present invention for creating and approving an association between online identities based on a consent policy using the propose association and resolve association methods.

### DETAILED DESCRIPTION OF A PREFERRED EMBODIMENT

The detailed description which follows is in terms of processes and symbolic representations of operations by conventional computer components, including a processor, memory storage devices for the processor, connected display devices, and input devices. These described processes and operations may utilize conventional computer components in a heterogeneous distributed computing environment, including remote file servers, computer servers, and memory storage devices. Each of these conventional distributed computing components is accessible by the processor via a communication network.

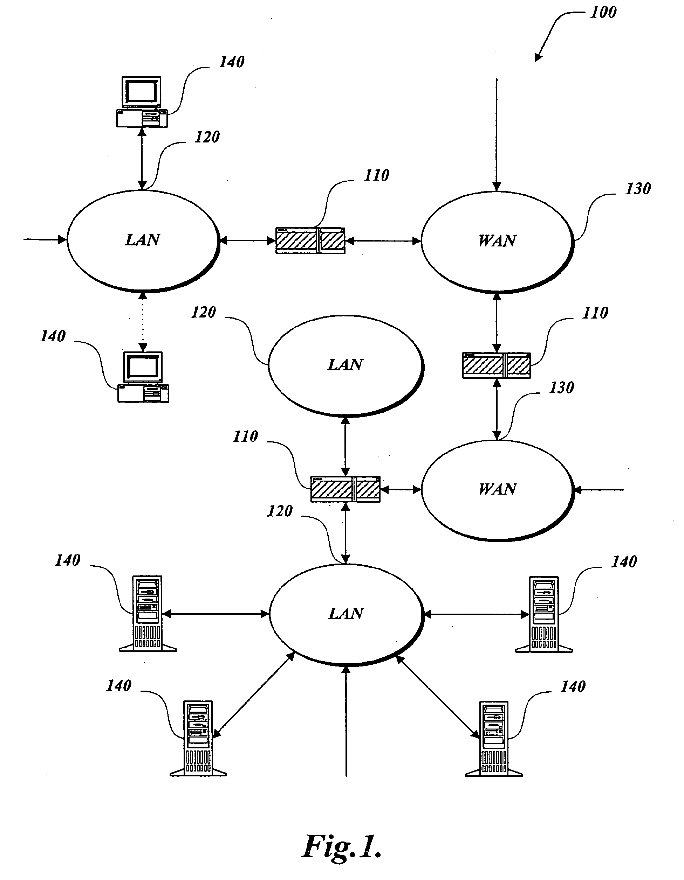

The term "Internet" refers to a collection of networks and routers capable of communicating with one another. A representative section of the Internet 100 is shown in FIGURE 1. The representation section of the Internet 100 shown in FIGURE 1 includes a plurality of local area networks (LANs) 120 and wide area networks (WANs) 130 interconnected by routers 110. The routers 110 are generally special purpose computers used to interface one LAN or WAN to another. Communication links within the LANs may be formed by twisted pair wire, coaxial cable, or any other well-known communication linkage technology, including wireless technology. Communication links between networks may be formed by 56 Kbps analog telephone lines, or 1 Mbps digital T-1 lines and/or 45 Mbps T-3 lines or any other well-known communication linkage technology, including wireless technology. Further, computers and other related electronic devices 140 can be remotely connected to either the LANs 120 or the WANs 130 via a modem and temporary telephone link, including a wireless telephone link. Such computers and electronic devices 140 are shown in FIGURE 1 as connected to one of the LANs 120. It will be appreciated that the Internet 100 comprises a vast number of such interconnected networks, computers, and routers and that only a small, representative section of the Internet 100 is shown in FIGURE 1.

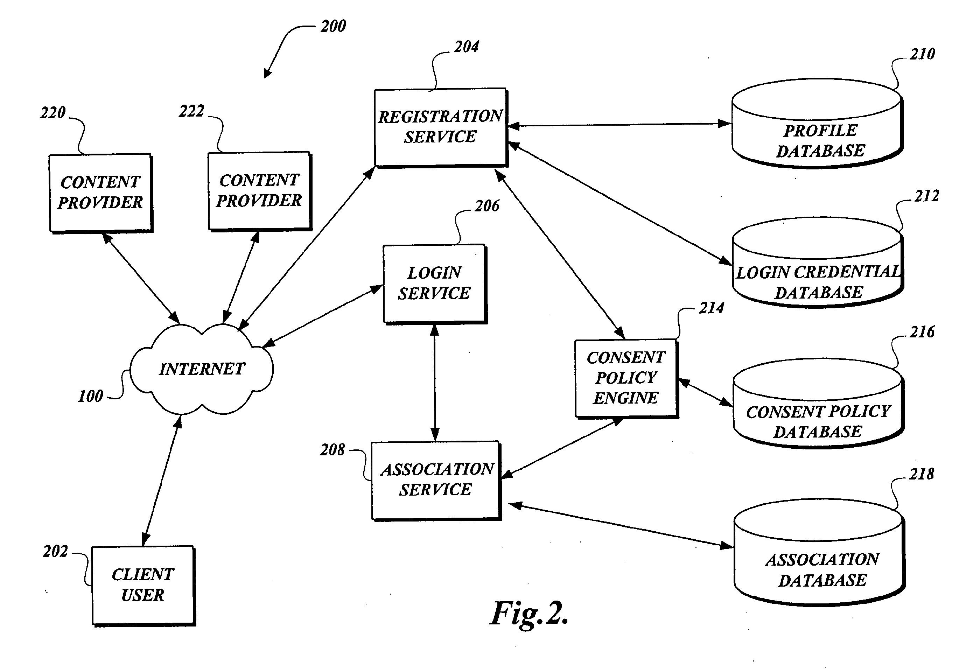

FIGURE 2 is a block diagram of a system 200 for enforcing a consent policy on an online identity. A consent policy is a policy that requires that consent be obtained from an online identity before an online task can be performed. When a consent policy is applied to an online identity, an association is created and approved between two or more online identities based on the consent policy. The consent policy defines the rules and restrictions for imposing the consent policy onto online identities. An association is a specific instance of a consent policy applied between two or more online identities. The association is between an online identity manager and a managed online identity, such that the online identity manager has authority to consent to a task requested on behalf of the managed online identity.

The consent policy is implemented by a corresponding application. Before a managed online identity is allowed to perform a requested task covered by the consent policy, the corresponding application determines if there is an association based on the consent policy for the managed online identity. If so, the application obtains consent from the associated online identity manager. The association indicates that the approved online identity manager has authority to consent to a managed online identity being allowed to perform a task covered by the consent policy. An example of an application that implements a consent policy is a parental controls application. A parental controls application implements a consent policy for an associated parent online identity that manages a child online identity. More specifically, a parental controls application ensures that before a child (the managed online identity) is allowed to perform an online action, consent must be acquired from the parent (the online identity manager). For a more detailed description of the parental controls application, attention is directed to U.S. Patent Application No. 10/187,408, filed June 28, 2002, entitled "Parental Controls Customization and Notification," the subject matter of which is incorporated herein by reference.

Another example of a consent policy implementation application of the present invention is the Children's Online Privacy Protection Act ("COPPA"). In 1998, the Children's Online Privacy Protection Act ("COPPA") was passed to prohibit Web sites from gathering personal information from children under the age of 13 without an adult's consent. A COPPA application of the invention implements the COPPA policy that requires obtaining consent from an adult before accessing profile information for a child age 13 or under.

The system 200 shown in FIGURE 2 generally operates in a distributed computer environment comprising individual computer systems interconnected over a network (such as the Internet 100). The system 200 includes a client user 202, a registration service 204, a login service 206, an association service 208, a profile database 210, a login credential database 212, a consent policy engine 214, a consent policy database 216, an association database 218, and content providers 220 and 222 interconnected by an internetwork, such as Internet 100. FIGURE 2 illustrates that the registration service 204 is in communication with the profile database 210, the login credential database 212, and the consent policy engine 214. The consent policy engine 214 is in communication with the consent policy database 216 and the association service 208. The login service 206 communicates with the association service 208. The association service 208 communicates with the consent policy engine 214 and the association database 218 as shown in FIGURE 2. The registration service 204, login service 206, association service 208, profile database 210, login credential database 212, consent policy engine 214, consent policy database 216, and association database 218 may reside together on the same server, or separately, or in combination on multiple servers that are in communication with each other. Additionally, though only one client user device 202 is shown, it will be appreciated that many such devices may be included in the system 200. Similarly, while only two content providers 220 and 222 are shown in FIGURE 2, it will be appreciated that many other content providers and online services may be connected to the internetwork, such as the Internet 100.

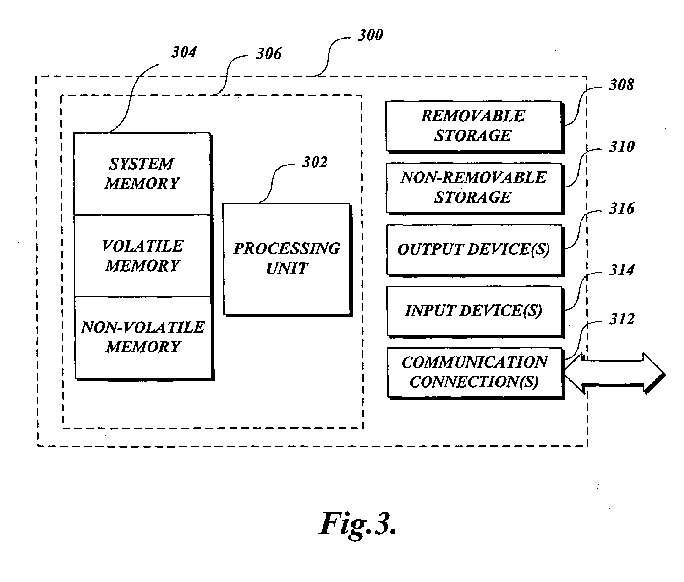

FIGURE 3 illustrates an exemplary device for implementing hereinafter described aspects of the invention. In its most basic configuration, device 300 typically includes at least one processing unit 302 and memory 304. Depending on the exact configuration and type of client device, memory 304 may be volatile (such as RAM), non-volatile (such as ROM, flash memory, etc.), or some combination of the two. This most basic configuration is illustrated in FIGURE 3 by dashed line 306. Device 300 may also have additional features/functionality. For example, device 300 may also include additional storage (removable and/or non-removable), including, but not limited to, magnetic or optical discs or tape. Such additional storage is illustrated in FIGURE 3 by removable storage 308 and non-removable storage 310. Computer storage media include volatile and non-volatile and removable and non-removable media implemented in any method or technology for storage of information, such as computer-readable instructions, data structures, program modules, or other data. Memory 304, removable storage 308, and non-removable storage 310 are all examples of computer storage media. Computer storage media include, but are not limited to, RAM, ROM, an EEPROM, flash memory or other memory technology, CD-ROM, digital versatile disc (DVD) or other optical storage, magnetic cassettes, magnetic tape, magnetic disc storage or other magnetic storage devices, or any other medium that can be used to store the desired information and that can be accessed by device 300. Any such computer media may be part of the device 300.

The computer storage medium of the device 300 also contains computer programs and/or routines suitable for communicating with and processing information from remote computers, such as the registration service 204, the login service 206, the association service 208, and the client user 202.

Device 300 may also contain communications connection(s) 312 that allows the device to communicate with other devices. Communication connection(s) 312 is an example of communication media. Communication media typically embody computer-readable instructions, data structures, program modules, or other data in a modulated data signal, such as a carrier wave or other transport mechanism, and include any information delivery media. The term "modulated data signal" means a signal that has one or more of its characteristics set or changed in such a manner as to encode information in the signal. By way of example and not limitation, communication media include wired media, such as a wired network or a direct wired connection, and wireless media, such as acoustic, RF, infrared, and other wireless media. The term "computer-readable media," as used herein, includes both storage media and communication media.

Device 300 may also have input device(s) 314, such as a keyboard, mouse, pen, voice input device, touch input device, etc. Output device(s) 316, such as a display, speakers, printer, etc., may also be included. Since all these devices are well known in the art, they are not described here.

The components of system 200 can be implemented utilizing the exemplary computing device described with reference to FIGURE 3. For example, the client user 202 device can be formed utilizing the exemplary computing device 300. Similarly, the server devices upon which reside the registration service 204, the login service 206, the association service 208, the profile database 210, the login credential database 212, the consent policy engine 214, the consent policy database 216, and the association database 218 may be formed utilizing the exemplary computing device 300. The computer device 300 is only one example of suitable computing environments and is not intended to suggest any limitation as to the scope of use or functionality of the invention. Neither should the computing environment be interpreted as having any dependency requirement relating to any one or a combination of components illustrated in the exemplary operating environment.

The invention is operational in numerous other general purpose or special computing system environments or configurations. Examples of well-known computing systems, environments, and/or configurations that may be suitable for implementing the invention include, but are not limited to, personal computers, server computers, laptop devices, multiprocessor systems, microprocessor-based systems, network PCs, minicomputers, mainframe computers, and distributed computing environments that include any of the above systems or the like.

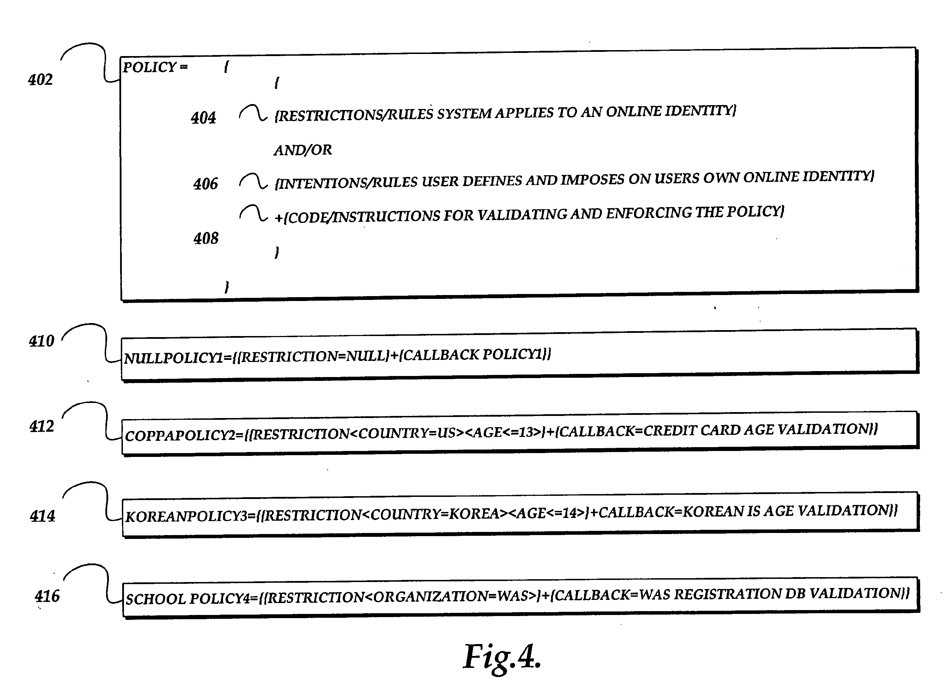

FIGURE 4 is a diagram illustrating an exemplary definition format for a consent policy and several specific examples of consent policy definitions. In one embodiment, the consent policy definitions are stored in the consent policy database 216. FIGURE 4 includes an exemplary consent policy definition format 402. In other embodiments of the present invention, different definition formats may be utilized to define a consent policy. The exemplary consent policy definition format 402 includes a restriction data element 402 containing rules that the system imposes on an online identity. The consent policy definition format 402 may also include an intentions data element 406, which includes rules the user defines and imposes on the user's own online identity. Consent policies may have just restrictions, just intentions, or both restrictions and intentions. The consent policy definition format 402 also includes a code data element 408, which contains instructions for validating and enforcing the consent policy.

Several examples of consent policy definitions are shown in FIGURE 4. One example is a null policy 1 definition 410. The null policy 1 definition 410 includes no restrictions. The null policy is designed so that the restrictions can be defined externally by an application or service corresponding to a consent policy such as the parental control application.

Another example is a COPPA policy 2 definition 412. The COPPA policy 2 definition 412 includes restrictions that the policy be imposed on users of online identities that reside in the U.S. and are 13 years old or younger. The COPPA policy 2 definition 412 also specifies performing a credit card age validation to verify that the user of the online identity manager is an adult.

A further example is a KOREAN policy 3 definition 414. The KOREAN policy 3 definition 414 illustrates a consent policy similar to the COPPA policy, but is specific to Korean laws. The KOREAN policy applies to users of online identities that reside in Korea and are 14 years old or younger. The KOREAN policy 3 definition 414 also specifies performing a Korean Identification Service age validation to verify that the user of the online identity manager is an adult.

A final example is a school policy 4 definition 416. The school policy 4 definition 416 includes restrictions that the policy be imposed on users of online identities related to Washington State school organizations. The school policy 4 definition 416 also specifies performing a Washington State school registration database validation.

The consent policy definitions illustrated and described above with reference to FIGURE 4 are only a few examples of the many consent policies possible. The present invention is not limited to the specific examples of consent policy definitions described and illustrated herein. Rather, the present invention is intended to provide a flexible infrastructure for enforcing a wide variety of consent policies, each potentially having different restrictions, intentions, and code and definition formats.

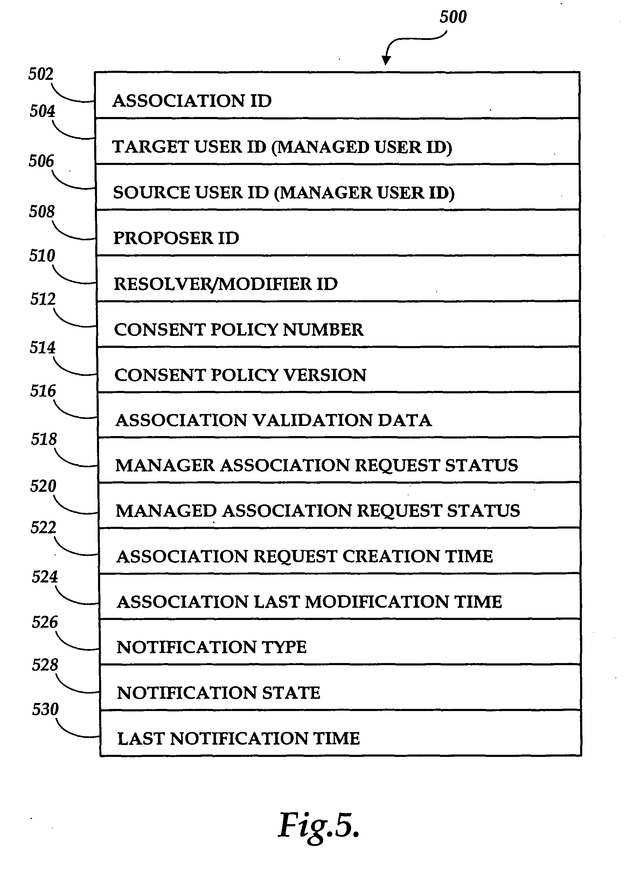

FIGURE 5 is a diagram that illustrates an exemplary data structure 500 for the association database in accordance with one embodiment of the present invention. The exemplary association database data structure 500 illustrated in FIGURE 5 is used by an embodiment of the present invention to create an entry in the association database 218. The illustrated association database data structure 500 includes a plurality of data elements, namely, an association ID 502, a target user ID (managed user ID) 504, a source user ID (manager user ID) 506, a proposer ID 508, a resolver/modifier ID 510, a consent policy number 512, a consent policy version 514, an association validation data 516, a manager association request status 518, a managed association request status 520, an association request creation time 522, an association last modification time 524, a notification type 526, a notification state 528, and a last notification time 530.

The association ID 502 is a unique identifier for the association in the association database 218. The association ID 502 includes information about the unique ID assigned to the association at the time the association is proposed. In one embodiment of the present invention, the unique association ID is generated by the system 200 at the time the association is proposed and an entry is created for the association in the association database 218.

The target user ID 504 is the unique user ID or sign-in name for the user of the online identity that is the target of the association. The target user ID 504 includes information about the user ID of the user to whose online identity the association requested is to be applied. In one embodiment of the present invention, the target online identity is the identity of the managed online identity, such as the child in an association based on the parental controls policy. The source user ID 506 includes information that is specified in the association request. The source user ID is the unique user ID or sign-in name of the user of the source online identity. In one embodiment of the present invention, the source online identity is the identity of the online identity manager, such as the parent in an association based on the parental controls policy. The proposer ID 508 is the unique ID or sign-in name of the user or application that is proposing the association. The proposer ID may be the same as the target user ID or source user ID or may the unique ID of a third party who is proposing the association. For example, the third-party proposer may be a husband who is proposing an association between his wife and child based on the parental controls policy. The resolver/modifier ID 510 is the unique user ID or sign-in name of the user or the identifier of an application that is resolving or modifying the association. For example, the resolver/modifier ID may be the ID of the user requesting to approve, deny, or delete an association.

The consent policy number 512 is a unique identifier for the consent policy that the association is based upon. In one embodiment of the present invention, the consent policy number is generated by the consent policy engine 214 when the consent policy is created and stored in the consent policy database 216. The consent policy version 514 is used to identify the version of the consent policy corresponding to the association. Over time, the consent policies can be updated and new releases of consent policies can be added to the system 200. The consent policy version 514 provides a way to distinguish between the different versions of the consent policy and to specify which version of the consent policy corresponds to the association.

The association validation data 516 is the data to be used to verify that the association is valid and meets the requirements of the corresponding consent policy. In one embodiment of the present invention, only a portion of the association validation data is retained once an association is resolved. In another embodiment of the present invention, the association validation data 516 includes the address of the location where the association validation data can be obtained. The manager association request status 518 includes information about the status of the association request from the perspective of the online identity manager. In one embodiment of the present invention, the manager association request status 518 is an enumerated data type having valves pending, approved, denied, and deleted. For example, if an online identity manager requests that the association be resolved as denied, the manager association request status will indicate denied. On the other hand, if an online identity manager requests that the association be resolved as accepted and the association is validated and approved, the manager association status request will indicate approved. Similarly, the managed association request status 520 includes information about the status of the association requests from the perspective of the managed online identity. In one embodiment of the present invention, the managed association request status 520 is an enumerated data type having values of pending, approved, denied, and deleted.

The association request creation time 522 includes information about when the association was created. In one embodiment, the association request creation time 522 is utilized to allow old requests to be aged out of the association database 218. The association last modification time 524 includes information about the last time the association was modified. The notification type 526 includes information about the type of notification, such as e-mail; address information. The notification state 528 includes information about the state of notification, such as pending and notified. The last notification time 530 includes information about when the notification state moves from a pending state to a notified state.

While one exemplary data structure for an association database 218 has been described with reference to FIGURE 5, other embodiments of the present invention may utilize various other data structures for the association database 218. The present invention is not limited to utilizing any particular data structure for implementing the association database 218.

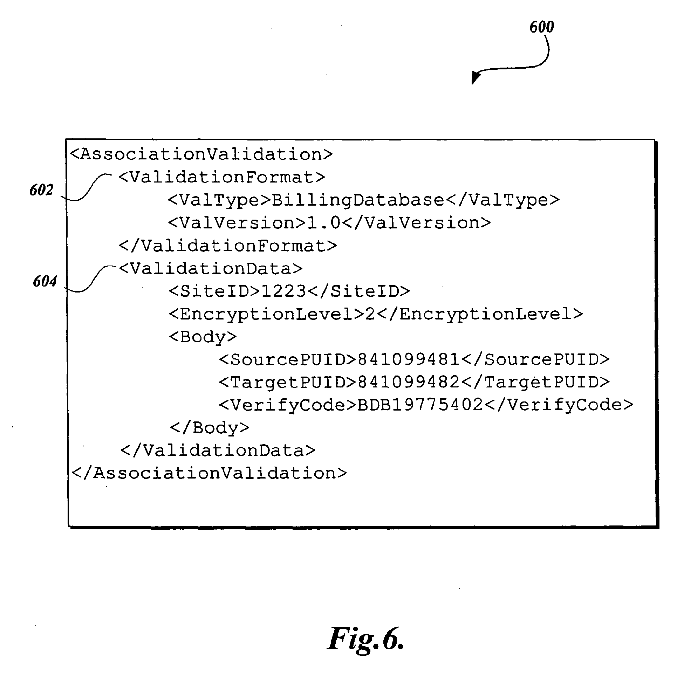

FIGURE 6 is a diagram illustrating an exemplary data structure 600 for association validation data. In one embodiment of the present invention, the illustrated association validation data structure 600 is implemented as extensible Markup Language (XML) schema. XML is a condensed form of Standard Generalized Markup Language (SGML). XML lets Web developers and designers create customized tags that offer greater flexibility in organizing and presenting information than is possible with the older HTML document coding system. XML is well known by those of ordinary skill in the art. Other embodiments of the present invention may use different conventional techniques for representing the association validation data structure. The present invention is not limited using XML schemas for implementing the association validation data structures.

The illustrated association validation data structure 600 includes a validation format 602 and a validation data 604. The validation format 602 includes a validation type of "Billing Database" and a validation version number of "1.0". The validation data 604 includes a site ID, an encryption level, and a body. The body includes a source user ID, a target user ID, and the verified code. In one embodiment of the present invention, the site ID is the key used for decrypting the validation data 604.

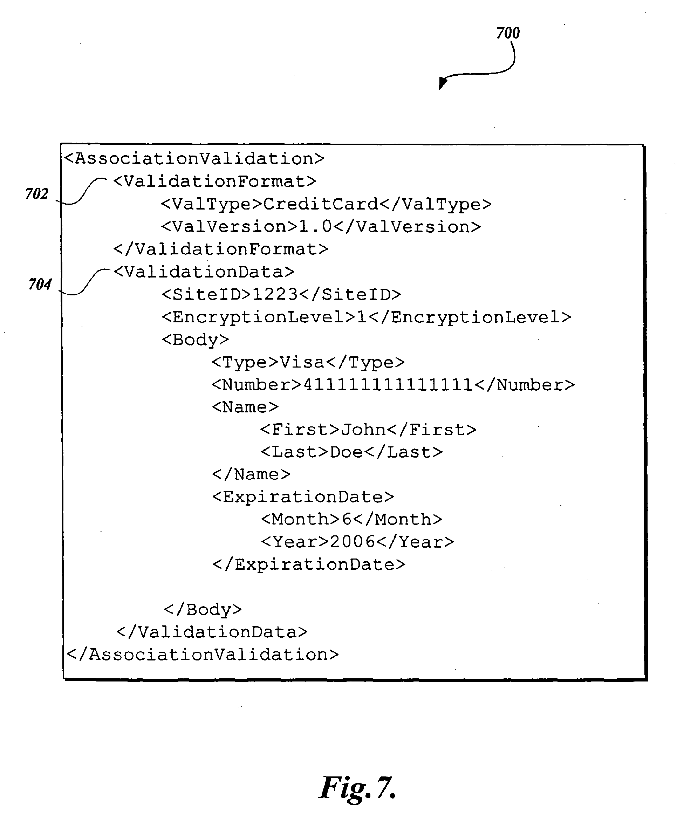

FIGURE 7 is a diagram illustrating an exemplary association validation data structure 700 utilized by the system 200. In one exemplary embodiment of the present invention, the illustrated association validation data structure 700 is implemented as an XML schema. In one embodiment, the system 200 uses the association validation data structure 700 for validating the association data in applying a COPPA consent policy to online identities. For example, in one embodiment of the present invention, a COPPA policy is applied to online identities in the United States that are age 13 or under. The COPPA policy may require that the validation method used include a verification of credit card information to ensure that the managed online identity is an adult.

The association validation data structure 700 includes a validation format 702 and a validation data 704, which includes association validation data for the credit card validation method. The validation format 702 includes a validation type, which indicates the credit card validation type. The validation format 702 also includes a validation version of "1.0". The validation data 704 includes a site ID, an encryption level, and a body. In one embodiment, the site ID is used as a key to decrypt the validation data. In the illustrated example, the body of the validation data 704 includes type, number, name, and expiration date information for the credit card. In the illustrated example, the type of credit card is VISA, the number is 4111111111111111, the first name is John, the last name is Doe, and the expiration date is 06/2006.

The data structures illustrated in FIGURES 6 and 7 represent only two examples of suitable data structures for the association validation data used by the system 200 and are not intended to suggest any limitation as to the scope of functionality of the present invention. Those skilled in the art will readily appreciate that the present invention may be practiced using various other association validation data structures. For example, other embodiments of the present invention may utilize data structures having various combinations of the data elements described above. Still other embodiments of the present invention may utilize data structures having data elements in addition to those described herein. In one embodiment, the data structures illustrated in FIGURES 6 and 7 are implemented using XML schemas. However, other languages, such as standard generalized markup language (SGML) and hypertext markup language (HTML), may also be used for describing and organizing the association validation data for exchange over the Internet.

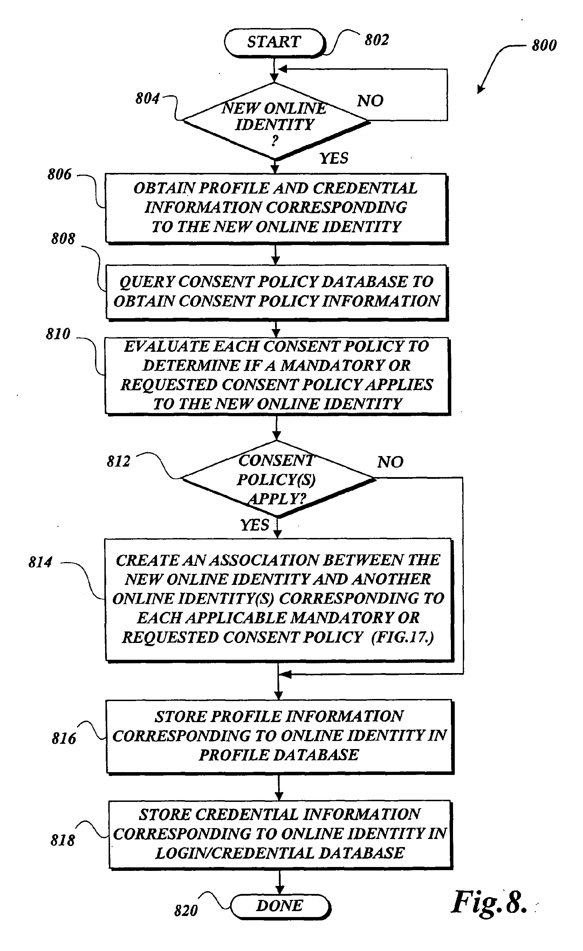

FIGURE 8 is a flow diagram illustrating the logic utilized in one embodiment of the present invention for enforcing consent policies on a new online identity. Routine 800 begins at block 802 and proceeds to decision block 804, where a test is made to determine if there is a new online identity. For example, the client user 202 may have an account with an Internet service provider (ISP) that supplies Internet connectivity services to individuals, businesses, and other organizations. Alternatively, the user may connect to the Internet through a high-speed communications line, such as a T1 carrier line, that can handle digital communications. Another alternative is that the user connects to the Internet through a digital subscriber line (DSL) that also provides high-speed transmissions over standard copper or telephone wiring. As another example, the user may utilize a dial-up service, which is a telephone connection provider for a local or worldwide public switch telephone network that provides Internet or intranet access and other resources. The present invention is not limited to any particular process or connection to the Internet 100.

After the user is connected to the Internet 100, the user is directed to registration service 204 to register a new online identity. The user may enter a name and password to log on to the Internet 100. After signing in to the registration service 204, the new online identity is detected. If at decision block 804 a new online identity was detected, routine 800 proceeds to block 806 where profile and credential information corresponding to the new online identity is obtained. If at decision block 804 it was determined that there is no new online identity, routine 800 cycles back until decision block 804 tests positive. After obtaining profile and credential information corresponding to the new online identity in block 806, routine 800 proceeds to block 808. At block 808, routine 800 queries the consent policy database 216 to obtain policy information. From block 808, routine 800 proceeds to block 810 and evaluates each consent policy to determine if a mandatory or requested consent policy applies to the online identity.

A consent policy is mandatory if it applies to a managed online identity. For example, the Children's Online Privacy Protection Act is a regulation that requires that all personal information collected from children online requires an adult's consent. The application of the COPPA policy on a child's online identity would be mandatory when the child is in the U.S. and is 13 years old or younger. A consent policy may also be requested. For example, a parent may request that a parental controls policy/association be applied to the parent's own online identity so as to create an association between the parent's online identity and the child's online identity. The parental controls policy is also a managed association which would be mandatory as applied to the child's online identity. Other consent policies may be voluntary. For example, a consent policy may be applied to create peer associations between the online identities that belong to a group. The group consent policy may be applied to the online identity of a user who has requested the consent policy/association by voluntarily joining the group.

At block 810, the consent policy engine 214 evaluates information about the consent policy obtained from the consent policy database 216, which includes the consent policy definitions, to determine if a consent policy applies to the online identity. As described above with reference to FIGURE 4, the consent policy definitions may include restrictions and/or intentions, which are rules for imposing the consent policy on to online identities. The consent policy engine 214 evaluates these rules to determine if the consent policy applies to the user profile information for the online identity. For example, a COPPA policy may have restrictions for the country and age profile information for the online identity. A COPPA policy may apply to an online identity for which the profile and credential information indicates that the user of the online identity is in the United States and is under the age of 13. Additionally, more than one consent policy may apply to a given online identity and a plurality of consent policies may apply to an online identity. For example, both the COPPA and parental controls policy may apply to a child's online identity.

After evaluating each policy to determine if a mandatory or requested consent policy(s) applies to the online identity in block 810, routine 800 proceeds to decision block 812. At decision block 812, a test is made to determine if any consent policies apply. If at decision block 812 it was determined that a consent policy applies, routine 800 proceeds to block 814. At block 814, routine 800 creates an association between the new online identity and another online identity corresponding to each applicable mandatory or requested consent policy.

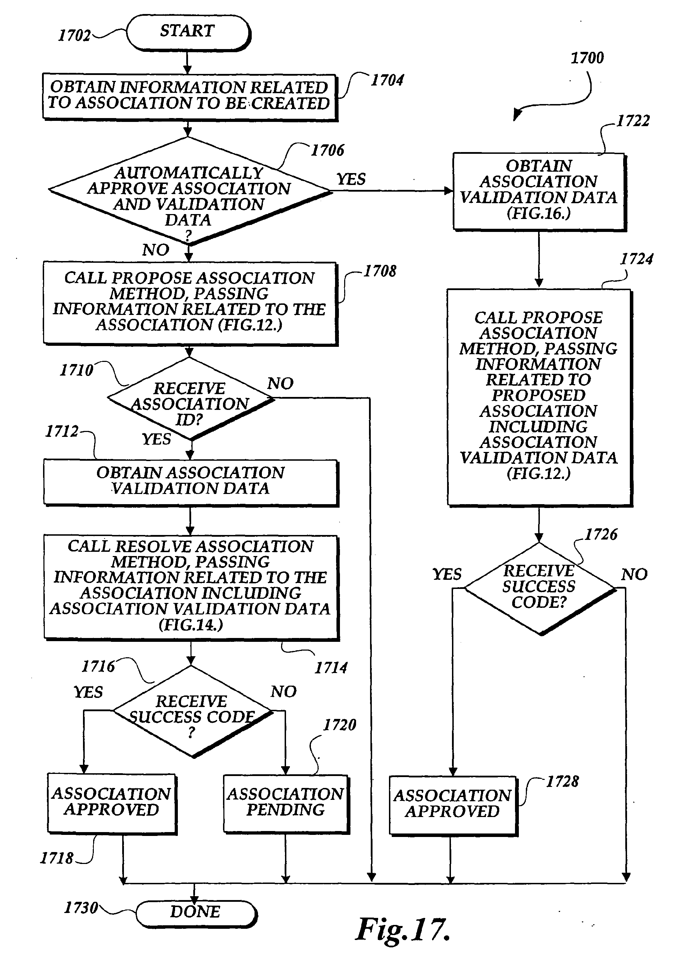

The step of creating an association between the new online identity and another online identity corresponding to each applicable mandatory or requested consent policy is described in more detail below with reference to FIGURE 17. When a consent policy is applied to an online identity, an association is created between a first online identity and a second online identity. The first online identity may be the same as the second online identity. The user of an online identity may request that a consent policy be applied to their own online identity. In this case, the consent policy definition would include intentions. Additionally, when a consent policy is applied to an online identity, the online identity may be associated with one or more different online identities. For example, a parental controls policy may be applied to the child online identity so as to create an association between the child and both parents of the child. As another example, a group consent policy may be applied to an online identity to create an association between the online identity and a plurality of other online identities that are members of the group.

After creating an association between the new online identity and another online identity corresponding to each applicable mandatory or requested consent policy at block 814, routine 800 proceeds to block 816. At block 816, routine 800 stores profile information corresponding to the online identity in the profile database 210. In one embodiment of the present invention, routine 800 stores profile information corresponding to the online identity in the profile database 210, which stores information about existing associations for the online identity. After storing profile information corresponding to the online identity in the profile database at block 816, routine 800 proceeds to block 818 where credential information corresponding to the online identity is stored in the login credential database 212.

If at decision block 812; it is determined that no consent policies apply, routine 800 proceeds directly to block 816 and performs the steps described above with reference to blocks 816 and 818. After storing credential information corresponding to the online identity in the login credential database 212, routine 800 is completed at block 820.

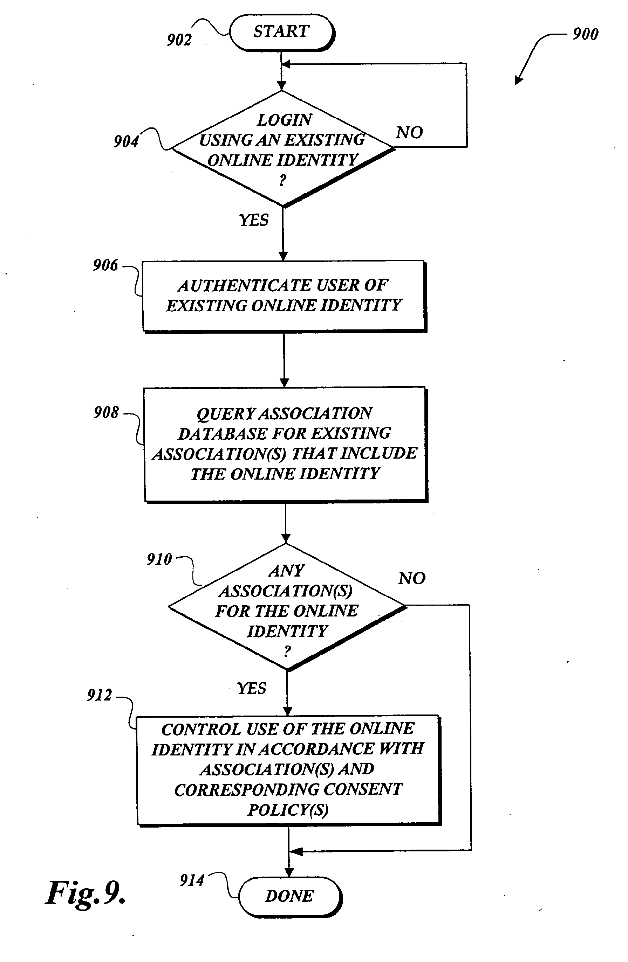

FIGURE 9 is a flow diagram illustrating routine 900 for enforcing consent policies on an existing online identity in accordance with one embodiment of the present invention. Routine 900 starts at block 902 and proceeds to decision block 904 where a test is performed to determine if the user is logging on using an existing online identity. If it is determined in decision block 904 that the user is not logging on using an existing online identity, routine 900 cycles back until decision block 904 tests positive. If at decision block 904 it is determined that the user is logging on using an existing online identity, routine 900 proceeds to block 906. At block 906, routine 900 authenticates the user of the online identity. Authentication in a network environment is a process by which the system validates a user's logon information. A user's name and password are compared against a list of authentication credentials. If the system detects a match, access is granted to the extent specified in the permission list for that user. Authentication processing is well known by those of ordinary skill in the art.

After authenticating the user of the online identity at block 906, routine 900 proceeds to block 908. At block 908, routine 900 queries the association database 218 for existing associations that include the online identity. After querying the association database 218 for existing associations that include the online identity, routine 900 proceeds to decision block 910 where a test is made to determine if there are any existing associations for the online identity. If at decision block 910 it is determined that there is an existing association for the online identity, routine 900 proceeds to block 912.

At block 912, routine 900 controls the online identity in accordance with association and corresponding consent policies. For example, if the existing association is based on a parental controls policy, the user's online identity would be controlled as set forth by the parental controls policy. As another example, if the existing association is based on the COPPA policy, the user of the online identity would be controlled in accordance with the COPPA policy. After controlling the use of the online identity in accordance with the association and corresponding consent policies at block 912, routine 900 proceeds to block 915. If at decision block 910 it is determined that there are no existing associations for the online identity, routine 900 proceeds to block 915. At block 915, routine 900 is completed.

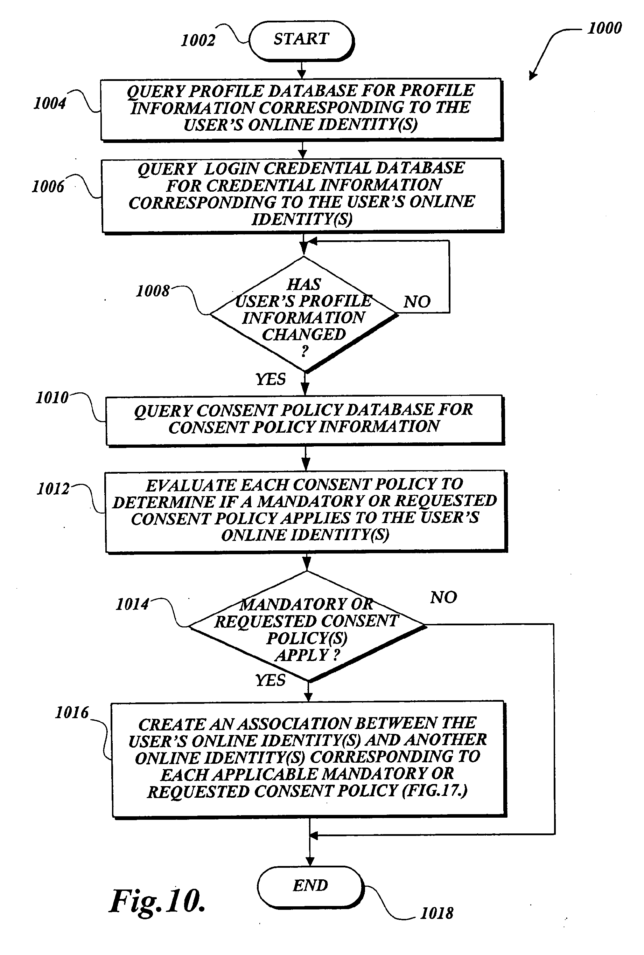

FIGURE 10 is a flow diagram illustrating routine 1000 for enforcing consent policies on an online identity for which the profile information has changed, in accordance with one embodiment of the present invention. Routine 1000 starts at block 1002 and proceeds to block 1004, where the profile database 210 is queried for information corresponding to the user's online identity. As discussed above, a user may have more than one online identity. For example, a user may have one online identity for use in visiting Web sites related to financial information and another online identity for use in visiting sports or entertainment related Web sites. After querying the profile database 210 for profile information corresponding to the user's one or more online identities, routine 1000 proceeds to block 1006. At block 1006, routine 1000 queries the login credential database 212 for credential information corresponding to the user's online identity and routine 1000 proceeds to decision block 1008. At decision block 1008, a test is made to determine if the user's profile information has changed. If at decision block 1008 it is determined that the user's profile information has not changed, routine 1000 cycles back until decision block 1008 tests positive.

If at decision block 1008 it is determined that the user's profile information has changed, routine 1000 proceeds to block 1010 where the consent policy database 216 is queried for consent policy information. After querying the consent policy database 216 for consent policy information, routine 1000 proceeds to block 1012. At block 1012, routine 1000 evaluates each consent policy to determine if a mandatory or requested consent policy applies to the user's online identity. In one embodiment, evaluating each consent policy to determine if it applies to the user's online identity includes comparing the restrictions and/or intentions for the consent policy to the user's profile information that corresponds to the user's online identity. Because the user's profile information corresponding to the online identity has been modified, different consent policies may apply to the user's online identity. If, for example, the user's profile information has been modified to reflect that the user is a year older, i.e., the user has changed from 13 years old to 14 years old, the COPPA policy would no longer apply to the user's online identity. As another example, if the user's profile information has changed to indicate that the user is a new student of a school, a school policy may apply to user's online identity.

After evaluating each consent policy to determine if a mandatory requested consent policy applies to the user's online identity at block 1012, routine 1000 proceeds to decision block 1014. At decision block 1014, a test is performed to determine if there are any mandatory or requested consent policies that apply to the user's online identity. If it is determined that a mandatory or requested consent policy applies to the user's online identity, routine 1000 proceeds to block 1016. At block 1016, routine 1000 creates an association between the user's online identity and another online identity corresponding to each applicable mandatory or requested consent policy.

The creation of an association between the user's online identity and another online identity corresponding to the applicable mandatory or requested policy is described below with reference to FIGURE 17. As discussed previously, the consent policy that applies to the user's online identity may be mandatory or requested. In one embodiment, a consent policy that is not mandatory or requested is not applied to the user's online identity. For example, if a voluntary consent policy is not requested, the voluntary consent policy would not be applied. An example of a voluntary consent policy is a policy for members of a group applied to the online identities of the users in the group. If the user's online identity profile information does not indicate that the user is a member of the group or has requested to be a member of the group, the voluntary consent policy for the group would not be applied to the user's online identity. However, if the user's profile information for the online identity indicates the user is a child of a parent who requested that the parental controls policy be applied to the child's online identity, it would be mandatory that the parental controls policy be applied to the child's online identity.

After creating an association between the user's online identity and another online identity corresponding to each applicable mandatory or requested consent policy at block 1016, routine 1000 proceeds to block 1018. If at decision block 1014; it was determined that no mandatory or requested policies apply, routine 1000 proceeds to block 1018. At block 1018, routine 1000 is completed.

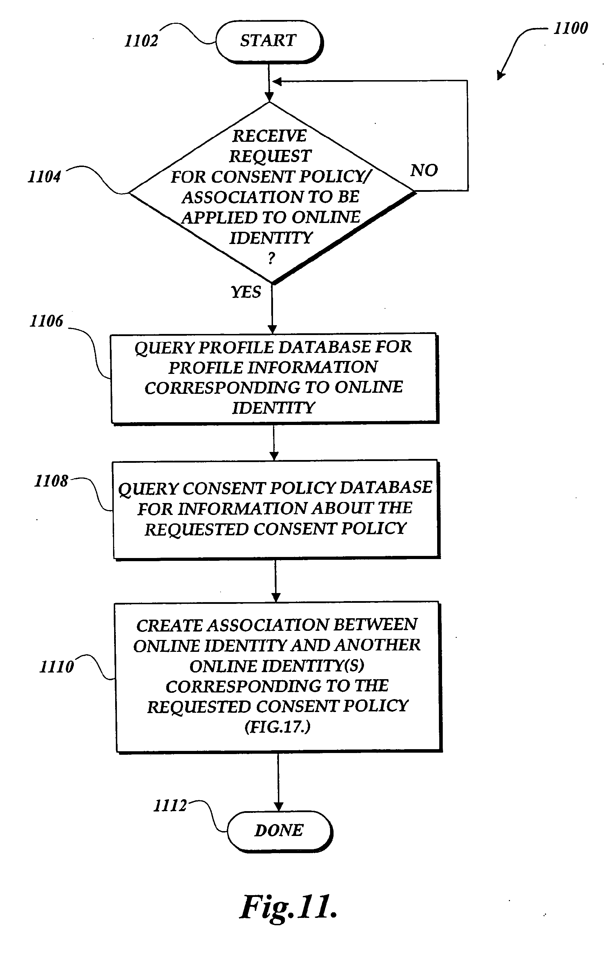

FIGURE 11 is a flow diagram illustrating routine 1100 for applying a requested association based on a consent policy to an online identity, in accordance with one embodiment of the present invention. Routine 1100 starts at block 1102 and proceeds to decision block 1104, where a test is performed to determine if a request for an association consent policy for an online identity has been received. If at decision block 1104 it is determined that no request for an association/consent policy for the online identity has been received, routine 1100 cycles back until decision block 1104 tests positive. If at decision block 1104 it is determined that a request for an association/consent policy for the online identity has been received, routine 1100 proceeds to block 1106. For example, a parent online identity may request an association based on parental controls policy be created for the parent's and child's online identities. As another example, a user may request to join a group and thereby request an association based on the group consent policy to be created for the user's online identity and other group members' online identities.

At block 1106, routine 1100 queries the profile database 210 for profile information corresponding to the online identity. After querying the profile database 210 for profile information corresponding to the online identity, routine 1100 proceeds to block 1108. At block 1108, routine 1100 queries the consent policy database 216 for information about the requested consent policy. For example, in one embodiment of the present invention, the information about the requested consent policy may include information about restrictions, which were described above and are rules that the system 200 imposes onto online identities. When an association is created based on a consent policy, both the online identity source/manager and the target/managed online identity need to meet the consent policy restrictions. For example, an association based on the COPPA policy needs to be between an online identity source/manager that satisfies the COPPA policy adult restriction and a target/managed online identity that satisfies the COPPA policy child restriction. An association based on the COPPA policy would not be created between two users of online identities that are children. Additionally, in one embodiment of the present invention, the information about the requested consent policy may also include a description of the intentions, which were described above and are rules a user defines which are to be imposed on the user's own online identity. The consent policy information may include restrictions and/or intentions. Additionally, in one embodiment of the present invention, the requested consent policy information includes code or references to code that contains instructions for validating and enforcing the requested consent policy.

After querying the consent policy database 216 for information about the requested consent policy at block 1108, routine 1100 proceeds to block 1110. At block 1110, routine 1100 creates an association between the online identity and another online identity corresponding to the requested consent policy. The step of creating the association between the online identity and another online identity corresponding to the requested policy is described below with reference to FIGURE 17 in accordance with one embodiment of the present invention. The requested consent policy may be applied to the online identity to create an association between the online identity and one or more other policy-applicable online identities. Additionally, the requested consent policy may be applied to the online identity to create an association where the source online identity and target online identities are both users' online identities, such as in the case where the user of the online identity imposes intentions on the user's own online identity. After creating the association between the online identity and another online identity corresponding to the requested consent policy at block 1110, routine 1100 ends.

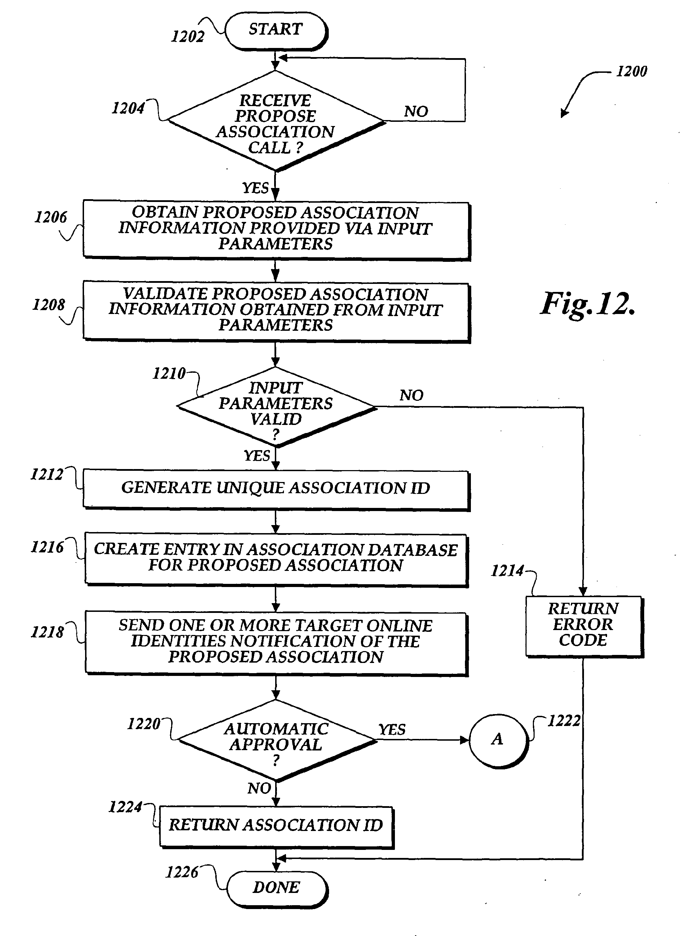

FIGURE 12 is a flow diagram illustrating routine 1200 for proposing an association based on a consent policy in accordance with one embodiment of the present invention. The propose association method allows the associations to be created between two or more policy-applicable online identities. In one embodiment of the present invention, routine 1200 is implemented as a method that is called as part of an application programming interface (API). Routine 1200 may be called by an application corresponding to a consent policy. For example, a parental controls application may call the propose association method. Additionally, a user may submit a call to the propose association method. For example, the user of an online identity may call the propose association method to request that an association be created for the user's own online identity. In one exemplary embodiment, the association methods described with reference to FIGURES 12-17 are exposed to client users 202 and other Internet-based applications using an application programming interface (API). In one embodiment of the present invention, the association methods are exposed to the clients and other Internet applications using a Simple Object Access Protocol (SOAP) interface. SOAP interfaces are simple, Extensible Markup Language (XML)-based protocol for exchanging structured and type information on the Internet. The XML-based protocol contains no application or transport semantics, which makes it highly modular and extensible. However, the association methods of the present invention are not limited to being implemented using any specific computer programming language and those of ordinary skill in the art will readily appreciate that the present invention may be practiced using many other conventional computer programming languages.

If at decision block 1204 it is determined that no propose association call has been received, routine 1200 cycles back until decision block 1204 tests positive. If at decision block 1204 it is determined that a propose association call has been received, routine 1200 proceeds to block 1206. At block 1206, routine 1200 obtains propose association information provided as part of the call via input parameters. In one exemplary embodiment of the present invention, the information provided about the proposed association includes the sign-in name of the user of the source online identity, the sign-in name of the user of the target online identity, the consent policy identifier, the association validation data, the source e-mail address, the target e-mail address, and the automatic approval flag. Other embodiments of the present invention may obtain some of these input parameters, while other embodiments of the present invention may obtain additional or different input parameters. The present invention is not limited to any specific input parameters or combination of input parameters passed to the propose association method. Additionally, the present invention is not limited to obtaining propose association information via input parameters, and other embodiments of the present invention may obtain the propose association information from other sources, such as a database or other computing device.

After obtaining the propose association information at block 1206, routine 1200 proceeds to block 1208. At block 1208, routine 1200 validates the propose association information. It is important that the user of the source and target online identities is validated so as to prevent the misuse of associations. If the user of the source or target online identities is not valid, the proposed association will not be created. In one embodiment of the present invention, routine 1200 validates the sign-in name of the user of the source online identity to confirm that it matches the information in the profile database. Similarly, one embodiment of routine 1200 also validates the sign-in name of the user of the target online identity to confirm that it matches the information in a profile database. Additionally, one embodiment of routine 1200 validates the policy identifier to confirm that it is a valid policy identifier. Routine 1200 may also validate that validation data has been provided if the automatic approval flag is set to true.

After validating the propose association information obtained from the input parameters at block 1208, routine 1200 proceeds to decision block 1210 where a test is made to determine if the input parameters are valid. If at decision block 1210 it is determined that the input parameters are not valid, routine 1200 proceeds to block 1214 where an error code is returned. After returning the error code at block 1214, routine 1200 proceeds to block 1226.

If at decision block 1210 it is determined that the input parameters are valid, routine 1200 proceeds to block 1212. At block 1212, routine 1200 generates a unique association ID and proceeds to block 1216. At block 1216, routine 1200 creates an entry in the association database 218 for the proposed association. In one embodiment of the present invention, the exemplary data structure shown in FIGURE 5 is utilized for creating the entry for the association in the association database 218. However, the present invention is not so limited and other data structures may be used by other embodiments of the present invention.

After creating an entry in the association database 218 for the proposed association at block 1216, routine 1200 proceeds to block 1218. At block 1218, routine 1200 sends one or more target online identities involved in the association notification of the proposed association. In other embodiments of the present invention, the notification is optional and may not be sent. In still other embodiments, the users of target online identities or an application acting on behalf of the users; may query the association database 218 to obtain information about the proposed association. In still yet another embodiment, the users of the target online identities may visit a Web site that posts proposed associations for the target online identity. As those of ordinary skill in the art will readily appreciate, the present invention may be practiced using various conventional techniques for sending proposed association notifications to users of the target online identities. For example, in one embodiment, notification may be sent using e-mail and, in another embodiment, the notification may be sent using instant messaging.

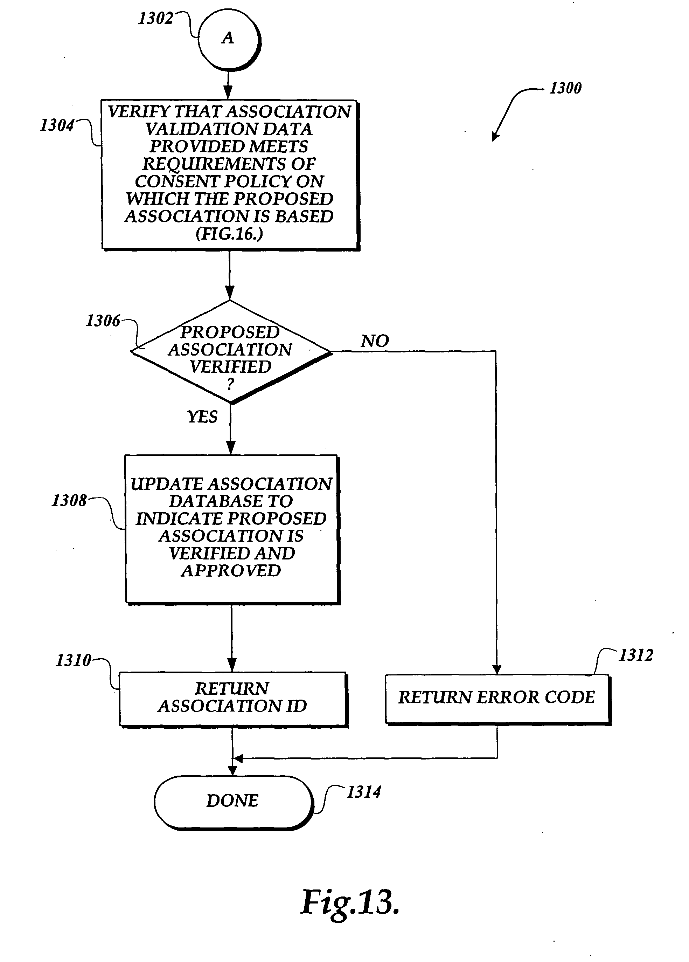

After sending one or more target online identities optional notification about the proposed association in block 1218, routine 1200 proceeds to decision block 1220 where a test is made to determine if automatic approval of the proposed association is being requested. If at decision block 1220 it is determined that automatic approval is being requested, routine 1200 continues to block 1222, which is shown in FIGURE 13. If at decision block 1220 it is determined that automatic approval is not requested, routine 1200 proceeds to block 1224 and returns the unique association ID. After returning the association ID at block 1224, routine 1200 proceeds to block 1226 and is completed.

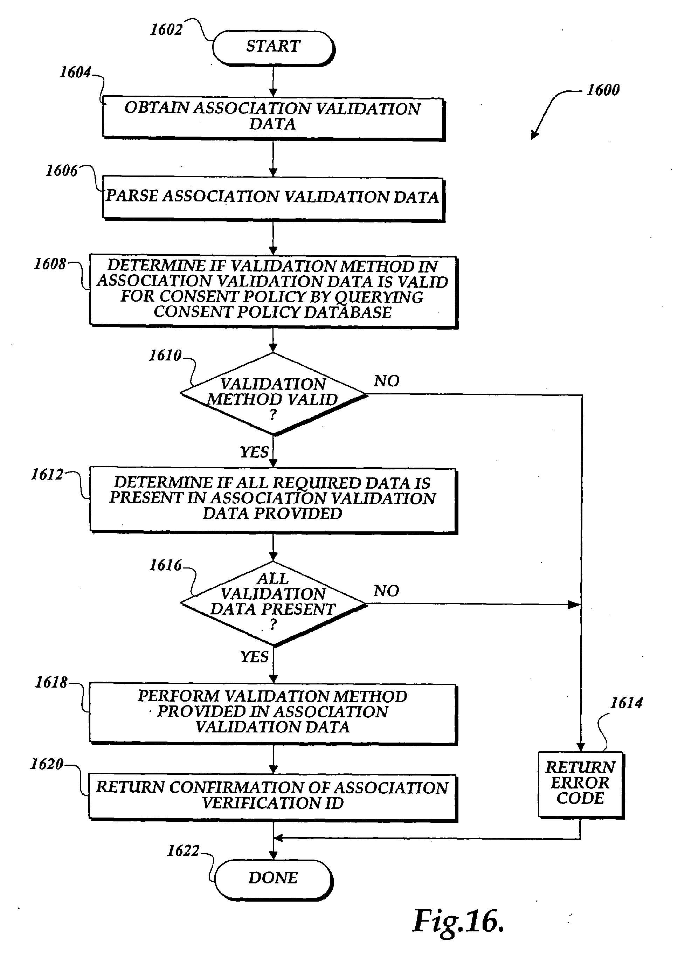

FIGURE 13 is a flow diagram illustrating the routine 1300 for proposing an association that is to be automatically approved. Routine 1300 starts at block 1302 and proceeds to block 1304 where routine 1300 verifies that the validation data provided meets requirements of the consent policy on which the proposed association is based. The process of verifying that the validation data provided meets requirements of the consent policy on which the proposed association is based is described below with reference to FIGURE 16.

Different consent policies may require different validation data to be provided before an association based on the policy can be created. For example, the COPPA policy may require credit card validation data to establish that the user of the online identity source/manager is an adult. Another example is a parental controls policy, which may require that the validation data provided include billing information from an Internet service provider verifying that the ISP account has a record that the user of the online identity source/manager is the parent and that the user of the target online identity is a child of the parent. The present invention enables required validation data to be specified for each consent policy. Virtually any type of validation data can serve to verify that the consent policy is being applied to create a valid association to protect against the misuse of consent policies. The present invention is intended to provide a flexible system for enforcing any consent policy and corresponding validation data requirements.

After verifying that the association validation data meets the requirements of the consent policy on which the proposed association is based at block 1304, routine 1300 proceeds to decision block 1306 where a test is performed to determine if the propose association validation data is verified. If at decision block 1306 it is determined that the propose association validation data is not verified, routine 1300 proceeds to block 1312 where an error code is returned. After returning the error code at block 1312, routine 1300 proceeds to block 1314. If at decision block 1306 it is determined that the propose association validation data is verified, routine 1300 proceeds to block 1308. At block 1308, routine 1300 updates the association database to indicate that the proposed association is verified and approved. After updating the association database to indicate that the proposed association is verified and approved, routine 1300 proceeds to block 1310 where the association ID is returned. After returning the association ID at block 1310, routine 1300 proceeds to block 1314 and routine 1300 is completed at block 1314.

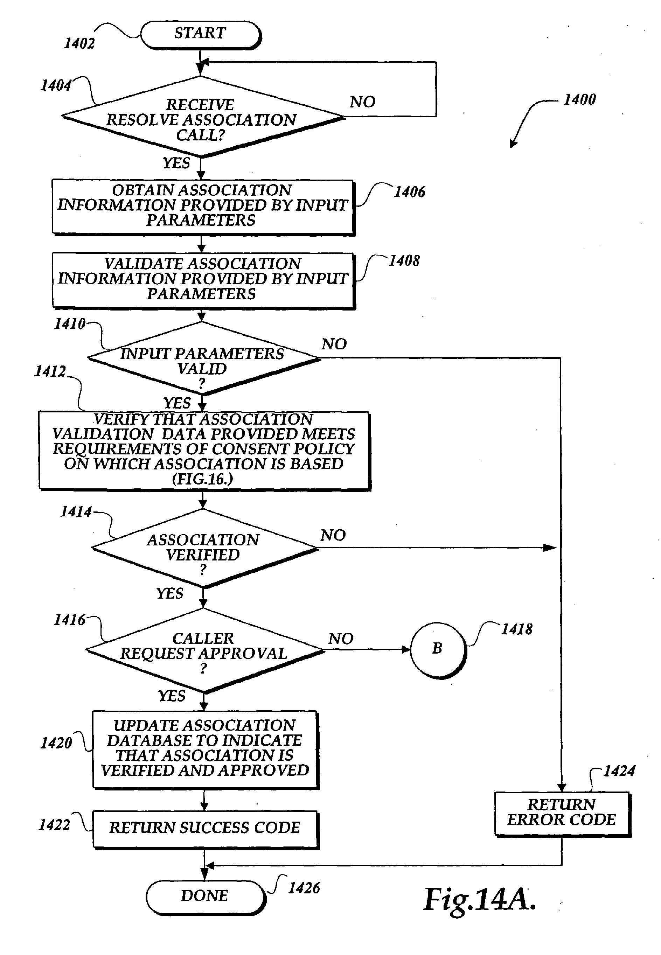

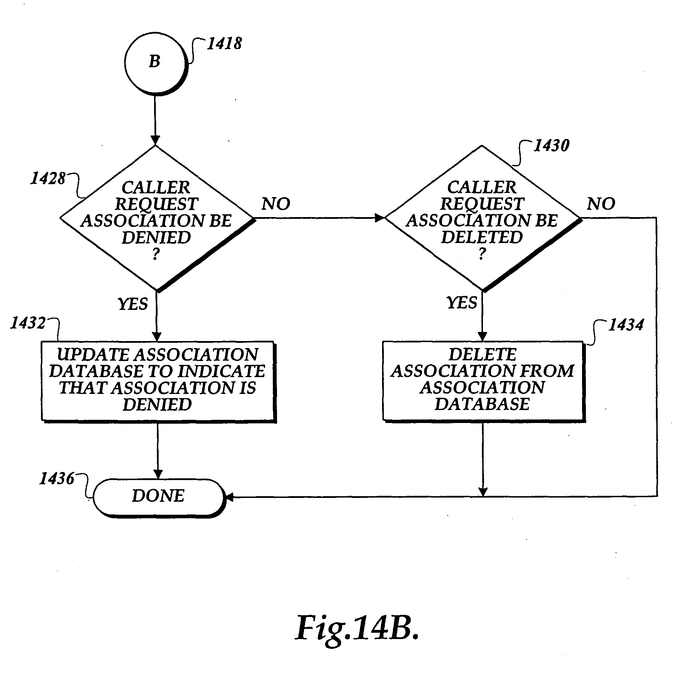

FIGURES 14A and 14B are flow diagrams illustrating routine 1400 for resolving an association in accordance with one embodiment of the present invention. Similarly, as described above with respect to the propose association method illustrated in FIGURE 13, one embodiment of the present invention implements routine 1400 as a method that is called as part of an application programming interface (API). Routine 1400 may be called by an application corresponding to a consent policy or may be called by a user, such as a user of the source or target online identities as well as a third-party online identity.

Routine 1400 starts at block 1402 and proceeds to decision block 1404 where a test is performed to determine if a resolve association call has been received. If it is determined at block 1404 that no resolve association call has been received, routine 1400 cycles back until block 1404 tests positive. If at decision block 1404, it is determined that a resolve association call has been received, routine 1400 proceeds to block 1406 and obtains association information provided by input parameters. In other embodiments of the present invention, the association information may be obtained from sources other than input parameters, such as a database or other computer device. In one embodiment of the present invention, the association information provided by input parameters includes the unique identifier of the association to be resolved, sign-in names or unique identifiers of the users of the online identities involved in the association, and an association status variable with an enumerated type having values of approved, deny, pending, and delete. In other embodiments of the present invention, other association information may be obtained that includes additional or different information about the association to be resolved.

After obtaining the association information provided by input parameters at block 1406, routine 1400 proceeds to block 1408 and validates association information provided by the input parameters. In one embodiment of the present invention, the unique identifier of the association is validated to ensure that the identifier refers to an existing association in the association database 218. In another embodiment of the present invention, routine 1400 validates the sign-in names of the users of the online identities involved in the association. In yet another embodiment, routine 1400 validates that the association status is one of the enumerated values for approved, deny, pending, and delete. In still yet other embodiments, routine 1400 validates different or additional association information.

After validating the association information provided by input parameters at block 1408, routine 1400 proceeds to decision block 1410 where a test is performed to determine if the input parameters are valid. If at decision block 1410 it is determined that the input parameters are not valid, routine 1400 proceeds to block 1424 to return an error code. After returning an error code at block 1424, routine 1400 proceeds to block 1426. If at decision block 1410, it is determined that the input parameters are valid, routine 1400 proceeds to block 1412. At block 1412, routine 1400 verifies that the association validation data provided meets requirements of the consent policy on which the association is based. The step of verifying that the association validation data provided meets requirements of the consent policy on which the association is based is described below with reference to FIGURE 16.

After processing the association validation data to determine if the association validation data meets the requirements of the consent policy on which the association is based, routine 1400 proceeds to decision block 1414 where a test is made to determine if the association validation data is verified. If at decision block 1414; it is determined that the association validation data is not verified, routine 1400 proceeds to block 1424 to return an error code. After returning the error code at block 1424, routine 1400 proceeds to block 1426.

If at decision block 1414, it is determined that the association validation data is verified, routine 1400 proceeds to decision block 1416 where a test is made to determine if the caller is requesting approval of the association. If at decision block 1416 it is determined that the caller is not requesting approval of the association, routine 1400 proceeds to block 1418, which is described below in reference to FIGURE 14B. If at decision block 1416, it is determined that the caller is requesting approval of the association, routine 1400 proceeds to block 1420. At block 1420, routine 1400 updates the association database 218 to indicate that the association is verified and approved. In one embodiment of the present invention, routine 1400 updates the entry for the association in the association database 218 by setting both the manager and the managed association request status data elements to approved using the data structure illustrated in FIGURE 5. In other embodiments of the present invention, routine 1400 may update different data elements and may use different data structures for the association database 218 than those illustrated in FIGURE 5. After updating the association database 218 to indicate that the association is verified and approved at block 1420, routine 1400 proceeds to block 1422, returns a success code, and proceeds to block 1426, where routine 1400 is completed.

If at decision block 1416 it is determined that the caller did not request approval, routine 1400 proceeds to block 1418, which is shown in FIGURE 14B. Routine 1400 proceeds from block 1418 to decision block 1428 where a test is made to determine if the caller has requested that the association be denied. If at decision block 1428 it is determined that the caller has requested that the association be denied, routine 1400 proceeds to block 1432. At block 1432, routine 1400 updates the association database 218 to indicate that the association is denied. In one embodiment of the present invention, routine 1400 updates the association database 218 to indicate that the association is denied by setting the manager or managed association request status to deny, depending on whether the caller is the user of the online identity manager or the managed online identity. After updating the association database 218 to indicate that the association is denied at block 1432, routine 1400 proceeds to block 1436.

If at decision block 1428, it is determined that the caller has not requested that the association be denied, routine 1400 proceeds to decision block 1430 where a test is made to determine if the caller is requesting that the association be deleted. If at decision block 1430 it is determined the caller is requesting that the association be deleted, routine 1400 proceeds to block 1434. At block 1434, routine 1400 deletes the entry for the association from the association database 218. In one embodiment of the present invention, associations are deleted from the association database 218 when a consent policy for the association is no longer valid, such as when a new consent policy version replaces the older consent policy version corresponding to the association. Other embodiments of the present invention delete associations that are pending and unresolved for an extended period of time, as a housekeeping function to keep the system 200 and association database 218 in good working order. After deleting the association from the association database 218 at block 1434, routine 1400 proceeds to block 1436. If at decision block 1430,- it is determined that the caller is not requesting that the association be deleted, routine 1400 proceeds to block 1436. Routine 1400 is completed at block 1436.

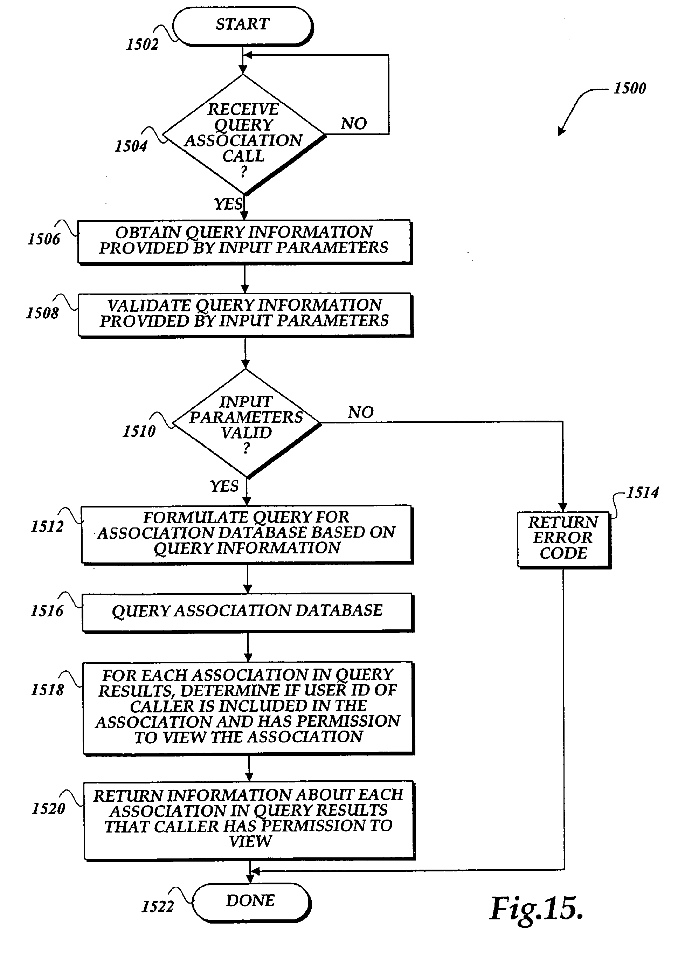

FIGURE 15 is a flow diagram illustrating routine 1500 for querying associations in accordance with one embodiment of the present invention. Similarly, as described above with respect to the propose association method and the resolve association method, one embodiment of the present invention implements routine 1500 as a method that is called as part of an application programming interface (API). Routine 1500 may be called by an application corresponding to a consent policy, such as the parental controls application, or by a user of an online identity.

Routine 1500 starts at block 1502 and proceeds to decision block 1504 where a test is performed to determine if a query association call has been received. If at decision block 1504, it is determined that no query association call has been received, routine 1500 cycles back until decision block 1504 tests positive. If at decision block 1504 it is determined that a query association call has been received, routine 1500 proceeds to block 1506 to obtain query information provided by input parameters. Other embodiments of the present invention may implement routine 1500 to obtain query information from sources in addition to, or instead of, the input parameters. In one embodiment of the present invention, the query information provided by the input parameters includes the number of online identities for which associations are to be queried and an array of unique identifiers or sign-in names for the users of online identities who own the association data to be retrieved by the query. Other embodiments of the present invention may obtain different or additional information related to the query.

After obtaining the query information provided by input parameters at block 1506, routine 1500 proceeds to block 1508 and validates the query information provided by input parameters. In one embodiment of the present invention, the routine 1500 validates the unique identifiers or sign-in names of the users of the online identities involved in the associations to be queried. In another embodiment, the routine 1500 performs queries for all associations in which the user of the online identity being searched for is the managed online identity. In another embodiment of the present invention, routine 1500 performs queries for all associations in which the user of the online identity being searched for is the online identity manager. Still other embodiments of the present invention perform different queries for associations in the association database 218. For example, an application corresponding to a consent policy or a user of an online identity may request a query of all existing associations that include for the users' online identity. As another example, a query may be requested to retrieve associations for an online identity that have certain status, such as approved, pending, denied, or delete. As yet another example, a query may be requested to retrieve associations for an online identity based on a particular consent policy.

After validating the query information provided by input parameters at block 1508, routine 1500 proceeds to decision block 1510 where a test is performed to determine if the input parameters are valid. If at decision block 1510 it is determined that the input parameters are not valid, routine 1500 proceeds to block 1514 to return an error code. After returning the error code at block 1514, routine 1500 proceeds to block 1522.

If at decision block 1510, it is determined that the input parameters are valid, routine 1500 proceeds to block 1512 to formulate a query to retrieve information from the association database 218 in accordance with the query information provided by the input parameters. After formulating the query for the association database 218, at block 1512, routine 1500 proceeds to block 1516 to query the association database 218. After querying the association database at block 1516, routine 1500 proceeds to block 1518. At block 1518, routine 1500 determines, for each association in the query results, if the sign-in name or unique identifier of the caller of the query association method is included in the association and has permission to view the association. In one embodiment of the present invention, the query association method retrieves all associations that are related to the unique identifiers or sign-in names of users in the input parameter array that the caller has permission to view. In one embodiment of the present invention, the caller has permission to view associations that include the unique identifier or sign-in name of the user who called the query association method. In another embodiment, for each user identifier in the input parameter array of user identifiers, permissions are determined valid if the caller is the user identifier in the array. In another embodiment of the present invention, permissions are determined valid if the caller is the manager of a user identifier for a given policy in the association. For example, if the caller is a user, or application acting on behalf of a user who is an adult COPPA manager of a child user identifier, then the caller has permission to view all COPPA associations for that child user identifier.

After determining if the user identifier of the caller is included in each association in the query results and has permission to view the association at block 1518, routine 1500 proceeds to block 1520. At block 1520, routine 1500 returns information about each association in the query results that the caller has permission to view. In one embodiment of the present invention, routine 1500 returns association data in an array that includes a unique identifier for the association, a unique user identifier of the creator of the association, the unique user identifier or sign-in name of the user for the target online identity included in the association, the unique user identifier or sign-in name of the user of the source online identity included in the association, the unique identifier of the consent policy corresponding to the association, the (target) managed association request status, and the (source) manager association request status. Other embodiments of the present invention may return other data related to the association in the query results. After returning information about each association in the query results the caller has permission to view at block 1520, routine 1500 proceeds to block 1522. At block 1522, routine 1500 is completed.

FIGURE 16 is a flow diagram illustrating routine 1600 for validating the association validation data in accordance with one embodiment of the present invention. An important aspect of the present invention is to verify the association validation data to prevent the misuse of the enforcement of consent policies and the corresponding associations between online identities. Routine 1600 starts at block 1602 and proceeds to block 1604 where association validation data is obtained. In one embodiment, the association validation data is provided by an application or user who is resolving an association. The association validation data required may vary depending on the corresponding consent policy. Different consent policies may have different requirements for association validation data. For example, the COPPA policy may require that before an association based on the COPPA policy can be created, credit card information must be obtained and verified. As another example, the KOREAN policy may require that before a corresponding association can be created, Korean identification information has to be verified. As yet another example, a parental controls policy may require that before a corresponding association can be created, billing information from an Internet service provider must be obtained and verified as confirming that the association is between parent and child online identities. Examples of the parental controls and COPPA association validation data were described above with references to FIGURES 6 and 7, respectively.

After obtaining association validation data at block 1604, routine 1600 proceeds to block 1606, where association validation data is parsed. In one embodiment of the present invention, the association validation data is provided using XML and is parsed in accordance with an XML schema that specifies and describes data in a an XML environment. XML schemas have been developed as an open, vendor-neutral format to enhance information exchange in e-commerce over the Internet. XML schemas are also standard for the description and encoding of data and are well known by those of ordinary skill in the art.

After parsing the association validation data at block 1606, routine 1600 proceeds to block 1608 to determine if the validation method provided in the association validation data is valid for the consent policy by querying the consent policy database 216. For example, the COPPA policy may require the validation method using the credit card information for the adult user of the online identity in association. As another example, the parental controls policy may require that the validation method verify billing information from an Internet service provider. Other policies may specify other validation methods to be used in place of or in addition to the examples described herein. The present invention is not limited to any specific consent policy, much less a specific validation method for a specific consent policy. Rather, the present invention is intended to provide a flexible method and system for enforcing any consent policy and creating the corresponding associations.

After determining if the validation method in the association validation data is valid for the consent policy by querying the consent policy database 218 at block 1608, routine 1600 proceeds to decision block 1610 where a test is made to determine if the validation method is valid. If at decision block 1610, it is determined that the validation method is not valid, routine 1600 proceeds to block 1614 to return an error code. After returning the error code at block 1614, routine 1600 proceeds to block 1622. If at decision block 1610 it is determined that the validation method is valid, routine 1600 proceeds to block 1612 to determine if all data required by the consent policy is present in the association validation data. After determining if all data required for the validation is present in the association validation data at block 1612, routine 1600 proceeds to decision block 1616 where a test is made to determine if all verification data is present. If at decision block 1616; it is determined that all validation data is not present, routine 1600 proceeds to block 1614 to return an error code. After returning an error code at block 1614, routine 1600 proceeds to block 1622.

If at decision block 1616; it is determined that all validation data is present, routine 1600 proceeds to block 1618 to perform the validation method provided in the association validation data. For example, in one embodiment of the present invention, the routine 1600 may perform a credit card validation method. In another embodiment of the present invention, routine 1600 may perform a billing data validation method. In still yet other embodiments of the present invention, other validation methods may be performed as required by the policy corresponding to the association being verified. After performing the validation method provided in the association validation data, at block 1618, routine 1600 proceeds to block 1620 to return confirmation of association verification ID. After returning the confirmation of association verification ID at block 1620, routine 1600 proceeds to block 1622. At block 1622, routine 1600 is completed.

FIGURE 17 is a flow diagram illustrating routine 1700 for creating an association in accordance with one embodiment of the present invention. Routine 1700 illustrates only one way of creating an association and the present invention is not limited to creating associations using the steps illustrated in FIGURE 17. FIGURE 17 is intended to illustrate one example of an application or user creating an association corresponding to a policy being applied to the online identities using the association methods. FIGURE 17 expands upon block 814 of FIGURE 8, block 1016 of FIGURE 10, and block 1110 of FIGURE 11. Routine 1700 makes use of the methods for proposing an association and resolving an association as described above with reference to FIGURES 12, 13, 14A, and 14B, respectively. The present invention is not limited to any specific order or sequence of method calls for proposing, resolving, and querying associations. Routine 1700 is shown as an example to illustrate how the proposed, resolve, and query methods can be used by an application or user to create association in accordance with the present invention.

Routine 1700 starts at block 1702 and proceeds to block 1704 to obtain information related to the association being created. In one embodiment of the present invention, the routine 1700 obtains information related to the association which includes the sign-in name of the source and target online identities, the policy identifier, association validation data, the source and target e-mail addresses, and the automatic approval indicator. However, the present invention is not limited to obtaining any particular association information, and other embodiments of the present invention may obtain association information that differs from or is in addition to the information described herein.

After obtaining information related to the association to be created at block 1704, routine 1700 proceeds to decision block 1706, where a test is made to determine if routine 1700 should automatically approve the association and validation data. If at decision block 1706 it is determined that automatic approval of the association and validation data is not to be performed, routine 1700 proceeds to block 1708. At block 1708, routine 1700 calls the propose association method, passing information related to the association. In one embodiment of the present invention, the propose association method performs the steps illustrated in FIGURE 12 described above.

After calling the propose association method and passing information related to the association at block 1708, routine 1700 proceeds to decision block 1710 where a test is made to determine if the association ID has been received. In one embodiment of the present invention, as illustrated in FIGURE 12, the propose association method returns a unique association ID when an association has been created as an entry in the association database 218 without error. If at decision block 1710 it is determined that no association ID has been received, routine 1700 proceeds to block 1730 and is completed. If at decision block 1710, it is determined that an association ID has been received, routine 1700 proceeds to block 1712 to obtain association validation data. In one embodiment of the present invention, an application for the policy corresponding to the association may obtain the association validation data. In another embodiment of the present invention, a user may supply the association validation data to the system 200 or to an application corresponding to the consent policy.

After obtaining the association validation data at block 1712, routine 1700 proceeds to block 1714 to call the resolve association method, passing information related to the association, including association validation data. An exemplary embodiment of the resolve association method is described above with reference to FIGURES 14A and 14B. As stated above, an application such as a parental controls application corresponding to the parental controls policy may be the entity that is calling the resolve association method on behalf of a child or parent user. Alternatively, a user may be submitting a resolve association request.

The present invention is not limited to a particular caller invoking the propose association, resolve association, and query association methods. Also as described above, with reference to FIGURES 14A and 14B, the information related to the association, including association validation data, may include the input parameters described with reference to FIGURES 14A and 14B and the validation data described with reference to FIGURES 6 and 7. However, the present invention is not limited to passing the above described information as the input parameters, and other information related to the association may also be passed as input parameters or may be obtained from other sources, such as a database.

After calling the resolve association method and passing information related to the association, including association validation data, at block 1714, routine 1700 proceeds to decision block 1716, where a test is performed to determine if a success code was received. As discussed above with respect to FIGURES 14A AND 14B, one embodiment of the resolve association method returns a success code upon verifying and approving an association. However, the present invention is not limited to this particular embodiment and other embodiments of the present invention may successfully create or approve an association without returning a success code. If at decision block 1716 it is determined that a success code was received, routine 1700 proceeds to block 1718 where the association is approved and routine 1700 is completed at block 1730. On the other hand, if at decision block 1716 it is determined that no success code was received, routine 1700 proceeds to block 1720 where association is still pending and the routine 1700 is completed at block 1730.

If at decision block 1706 the application or user creating the association wants to automatically approve the association validation data, routine 1700 proceeds to block 1722 to obtain the association validation data. After obtaining the association validation data at block 1722, routine 1700 proceeds to block 1724 to call the propose association method passing information related to the proposed association, including association validation data. One exemplary embodiment of the propose association method was described above with references to FIGURES 12 and 13. FIGURE 13 illustrates the automatic approval option for the proposed method in accordance with one embodiment of the present invention. The illustrated embodiment of the propose association method shown in FIGURE 13 returns a success code upon the successful association validation data being verified and approved. After calling the propose association method for automatically approving the association and passing the association validation data at block 1724, routine 1700 proceeds to decision block 1726. At decision block 1726, a test is made to determine if a success code was received. If it is determined at block 1726 that a success code was received, routine 1700 proceeds to block 1728. At block 1728, the association is approved and routine 1700 is completed at block 1730. If at decision block 1726 it is determined that no success code was received, routine 1700 proceeds to block 1730 and is completed.

With reference once again to FIGURE 2, an alternative embodiment of the present invention, the components of the system 200 may be implemented as distributed software components accessible via the communication network.

An example of a distributed application development and execution platform is the Microsoft® .NET platform from Microsoft® Corporation of Redmond, Washington. Generally described, the Microsoft® .NET platform is an application programming and execution platform that provides write-once, compile-once, run-anywhere application development. Microsoft® .NET platform applications may be created in any language as long as they are compiled by a compiler that targets the Microsoft® .NET universal runtime ("URT"), also known as the common language runtime engine. Such a compiler compiles .NET applications into intermediate language ("IL"), rather than directly into executable code.

To execute a .NET platform application, the compiled IL is interpreted, or "just-in-time" compiled, by the URT into native machine instructions. The native machine instructions can then be directly executed by the CPU. The Microsoft® .NET platform also includes a base library that comprises a large set of class libraries and services. These libraries and services provide access to the features of the URT and other high-level services so that software developers do not have to code the same services repeatedly. Although the present invention may be applicable with regard to a .NET platform implementation, the present invention may also be implemented in alternative platform environments.

While the preferred embodiment of the invention has been illustrated and described, it will be appreciated that various changes can be made therein without departing from the spirit and scope of the invention.

The embodiments of the invention in which an exclusive property or privilege is claimed are defined as follows:

## Claims

1. A computer system for enforcing consent policies on online identities comprising:
(a) an application module for identifying online identities covered by consent policies ("managed online identities") and enforcing said consent policies on said managed online identities by:
(1) interrogating a consent policy engine to determine:
(i) if an identified entity is a managed online identity; and
(ii) if an identified online entity is a managed online entity, the consent policy or policies covering said managed online identity; and
(2) not allowing said managed online identity to perform a task covered by the consent policy or policies covering said managed online identity without first obtaining consent from an associated online identity manager;
(b) a consent policy engine for determining:
(1) if an identified online entity is a managed online entity; and
(2) if an identified online entity is a managed online identity, the consent policy or policies covering said managed online identity; and
(c) an association module for creating and approving an association between managed online identities and associated online identity managers based on consent policies covering said managed online identities by:
(i) proposing an association between an online identity manager and a managed online identity based on the consent policy covering said managed online identity;
(ii) obtaining validation data for the proposed association;
(iii) determining if the validation data meets requirements of the consent policy applicable to said managed online identity; and;
(iv) if the validation data meets requirements of the consent policy applicable to said managed online identity, approving the proposed association, thereby allowing an online identity manager to consent to tasks covered by the consent policy applicable to said managed online identity.

2. A computer system for enforcing consent policies as claimed in Claim 1 wherein the consent policy is mandatory if the managed online identity is different from the online identity manager.

3. A computer system as claimed in Claim 1 wherein the consent policy is voluntary if the managed online identity and the online identity manager are the same.

4. A computer system for enforcing consent policies as claimed in Claim 1 wherein said consent policy is a parental control policy, the managed online identity is a child identity, and the online identity manager is a parent identity.

5. A computer system as claimed in Claim 4 wherein the parental control policy is the Child Online Privacy Protection Act.

6. A computer system as claimed in Claim 1 wherein said determination of whether an identified online identity is a managed online identity is based on user profile information received by said application module and supplied to said consent policy engine.

7. A computer system for enforcing consent policies as claimed in Claim 6 wherein the consent policy is mandatory if the managed online identity is different from the online identity manager.

8. A computer system as claimed in Claim 6 wherein the consent policy is voluntary if the managed online identity and the online identity manager are the same.

9. A computer system for enforcing consent policies as claimed in Claim 6 wherein said consent policy is a parental control policy, the managed online identity is a child identity, and the online identity manager is a parent identity.

10. A computer system as claimed in Claim 9 wherein the parental control policy is the Child Online Privacy Protection Act

11. A computer system for enforcing consent policies as claimed in Claim 6 wherein a consent policy is determined to apply if the user profile information for the managed online identity meets consent policy criteria established by the online identity manager.

12. A computer system for enforcing consent policies as claimed in Claim 11 wherein the consent policy is mandatory if the managed online identity is different from the online identity manager.

13. A computer system as claimed in Claim 11 wherein the consent policy is voluntary if the managed online identity and the online identity manager are the same.

14. A computer system for enforcing consent policies as claimed in Claim 11 wherein said consent policy is a parental controls policy, the managed online identity is a child identity, and the online identity manager is a parent identity.

15. A computer system as claimed in Claim 14 wherein the parental control policy is the Child Online Privacy Protection Act.

16. A computer system for enforcing consent policies as claimed in Claim 1 wherein said application module includes a registration service and a profile database and wherein online identities are registered by said registration service storing associated user profile information in said profile database.

17. A computer system for enforcing consent policies as claimed in Claim 16 wherein said consent policy engine receives a request to determine if a consent policy applies to an online identity when an online identity is registered by said registration service.

18. A computer system for enforcing consent policies as claimed in Claim 16 wherein said registration service can modify user profile information stored in said profile database and wherein said consent policy engine receives a request to determine if a consent policy applies to an identified online identity when user profile information related to an identified online identity is being modified by said registration service.

19. A computer system for enforcing consent policies as claimed in Claim 1 wherein said application module also includes a logon credential database for storing information suitable for verifying online identities and wherein said registration service verifies the identity of online users by company online user verification information with information stored in said login credential database when an online identity logs on.

20. A computer system for enforcing consent policies as claimed in Claim 1 wherein said association module can disapproves proposed associations if the validation data does not meet the requirements of the consent policy applicable to said managed online identity.

21. A computer system for enforcing consent policies as claimed in Claim 20 wherein disapproved proposed associations are deleted from said association module.

22. A method for enforcing a consent policy on online identities, the method comprising:
determining if a consent policy applies to user profile information corresponding to a first online identity;
if a consent policy applies to said user profile information corresponding to a first online identity, creating an association between the first online identity and a second online identity based on the consent policy, said second online identity being a manager of said first online identity; and
obtaining consent from the second online identity before the first online identity is allowed to perform an online task covered by the consent policy.

23. The method claimed in Claim 22 wherein the consent policy is mandatory if it applies to a managed online identity.

24. The method claimed in Claim 22 wherein the consent policy is voluntary if it applies to an online identity manager.

25. The method claimed in Claim 22 wherein the consent policy is determined to apply if the user profile information meets consent policy criteria established for a managed online identity.

26. The method claimed in Claim 25 wherein the consent policy is mandatory if it applies to a managed online identity.

27. The method claimed in Claim 25 wherein the consent policy is voluntary if it applies to an online identity manager.

28. The method claimed in Claim 25 wherein the consent policy is determined to apply if the consent policy has been requested by the first online identity and the user profile information for the first online identity meets the consent policy criteria for an online identity manager.

29. The method claimed in Claim 28 wherein the consent policy is mandatory if it applies to a managed online identity.

30. The method claimed in Claim 28 wherein the consent policy is voluntary if it applies to an online identity manager.

31. The method claimed in Claim 21 wherein creating the association between the first online identity and a second identity includes obtaining association validation data and verifying that the association validation data meets the consent policy requirements.

32. The method claimed in Claim 22 wherein the consent policies are parental control policies, the first online identity is a child and the second online identity is a parent identity.

33. The method claimed in Claim 32 wherein the consent policy is the Child Online Privacy Protection Act policy.

34. The method claimed in Claim 22 wherein creating an association between first online identity and a second online identity comprises:
obtaining information related to the association to be created;
proposing an association based on a consent policy;
obtaining association validation data;
resolving the association; and
approving the association if the resolving of the association is successful.

35. The method claimed in Claim 34 wherein prior to proposing an association based on a consent policy:
a determination is made regarding whether association and validation data can be automatically approved;
if association and validation data can be automatically approved, obtaining association validation data;
proposing an association based on said obtained validation data; and
approving the association.

36. A computer-readable medium comprising computer-executable instructions for enforcing a consent policy on online identities that when executed cause a computer system to:
determine if a consent policy applies to user profile information corresponding to a first online identity;
if a consent policy applies to said user profile information corresponding to a first online identity, create an association between the first online identity and a second online identity based on the consent policy, said second online identity being a manager of said first online identity; and
obtain consent from the second online identity before the first online identity is allowed to perform an online task covered by the consent policy.

37. A computer-readable medium as claimed in Claim 36 wherein the consent policy is mandatory if it applies to a managed online identity.

38. A computer-readable medium as claimed in Claim 36 wherein the consent policy is voluntary if it applies to an online identity manager.

39. A computer-readable medium as claimed in Claim 36 wherein the consent policy is determined to apply if the user profile information meets consent policy criteria established for a managed online identity.

40. A computer-readable medium as claimed in Claim 39 wherein the consent policy is mandatory if it applies to a managed online identity.

41. A computer-readable medium as claimed in Claim 39 wherein the consent policy is voluntary if it applies to an online identity manager.

42. A computer-readable medium as claimed in Claim 39 wherein the consent policy is determined to apply if the consent policy has been requested by the first online identity and the user profile information for the first online identity meets the consent policy for an online identity manager.

43. A computer-readable medium as claimed in Claim 42 wherein the consent policy is mandatory if it applies to a managed online identity.

44. A computer-readable medium as claimed in Claim 42 wherein the consent policy is voluntary if it applies to an online identity manager.

45. A computer-readable medium as claimed in Claim 36 wherein the association between the first online identity and a second identity includes association validation data and verification that the association validation data meets the consent policy requirements.

46. A computer-readable medium as claimed in Claim 36 wherein the consent policies are parental control policies, the first online identity is a child, and the second online identity is a parent identity.

47. A computer-readable medium as claimed in Claim 46 wherein the consent policy is the Child Online Privacy Protection Act policy.

48. A computer-readable medium as claimed in Claim 36 wherein the computer-executable instructions that cause the computer system to create an association between the first online identity and a second online identity cause the computer system to:
obtain formation related to the association to be created;
propose an association based on a consent policy;
obtain association validation data;
resolve the association; and
approve the association if the resolving of the association is successful.

49. A computer-readable medium as claimed in Claim 48 wherein, prior to an association based on a consent policy being proposed, said computer executable instructions cause said computer system to:
determine whether association and validation data can be automatically approved;
if association and validation data can be automatically approved, obtain association validation data;
propose an association based on said obtained validation data; and
approve the association.

50. A computer-readable medium having a data structure stored thereon for use in enforcing a consent policy on online identities, the data structure comprising:
a first data element indicative of association identification information;
a second data element indicative of identification information about an online identity manager;
a third data element indicative of identification information about a managed online identity;
a fourth data element indicative of policy identification information;
a fifth data element indicative of association verification information;
a sixth data element indicative of the status of an online identity manager association-related request; and
a seventh data element indicative of the status of a managed online identity association-related request;
wherein the data structure is used for adding, deleting, and modifying data in an association database, said association database used for creating and modifying associations between online identities based on a consent policy.

51. A computer-readable medium having a data structure stored thereon for use in enforcing a consent policy on online identities as claimed in Claim 50 wherein the association is a managed association wherein the online identity manager manages the managed online identity.

52. A computer-readable medium having a data structure stored thereon for use in enforcing a consent policy on online identities, the data structure comprising:
a first data element indicative of information about restrictions and rules to be applied to online identities; and
a second data element indicative of information about instructions for validating and enforcing the policy;
wherein the data structure is used for adding, deleting, and modifying data in a consent policy database, said consent policy database used for determining if a consent policy applies to a first online identity so as to require obtaining consent from an associated online identity before the first online identity is allowed to perform a task covered by the consent policy.

53. A computer-readable medium having a data structure stored thereon for use in enforcing a consent policy on online identities, the data structure comprising:
a first data element indicative of information about intentions, said intentions being restrictions and rules a user of an online identity defines and imposes on the user's own online identity; and
a second data element indicative of information about instructions for validating and enforcing the policies;
wherein the data structure is used for adding, deleting, and modifying data in a consent policy database, said consent policy database used for determining if a consent policy applies to a first online identity so as to require obtaining consent from an associated online identity before the first online identity is allowed to perform a task covered by the consent policy.
